# EUROPEAN PATENT APPLICATION

(11) **EP 4 825 629 A1**
(43) Date of publication of application: **21.10.2026**
(21) Application number: 24903858.9
(22) Date of filing: 28.06.2024
(51) Int. Cl.: B60K 35/22, B60K 35/60, B60K 35/55, B60K 35/81

(54) **VEHICLE DISPLAY DEVICE**

(30) Priority: 12.12.2023 KR 20230179219
(71) Applicant: LG Electronics Inc., Yeongdeungpo-gu Seoul 07336 (KR)
(72) Inventor: JEON, Byunglok, Seoul 06772 (KR); KIM, Hansoo, Seoul 06772 (KR); SON, Sanghyeun, Seoul 06772 (KR); SHIM, Inkoo, Seoul 06772 (KR); KIM, Jinhee, Seoul 06772 (KR); KIM, Byungkyu, Seoul 06772 (KR); CHUN, Sewon, Seoul 06772 (KR)
(74) Representative: Vossius & Partner Patentanwälte Rechtsanwälte mbB
(86) International application number: PCT/KR2024/009055
(87) International publication number: WO 2025/127287

(57) **Abstract**

A vehicle display device according to one embodiment of the present invention comprises: a display unit disposed in a housing having a slot, and coupled to a plurality of driving units operating in different directions, so as to be movable in different directions; and a control unit for controlling the operation of each of the display unit and the plurality of driving units. In addition, the plurality of driving units include: a first driving unit operating such that the display unit is moved in in a first direction; and a second driving unit operating such that the display unit is moved in a second direction different from the first direction, and thus the display unit is withdrawn or inserted through the slot so that the exposed area increases or decreases. The first driving unit includes a first fixed frame and a first movable frame disposed on the rear surface of the display unit, and the first movable frame is disposed to move in the first direction along a guide portion of the first fixed frame. The second driving unit is disposed in the first movable frame and includes a second fixed frame and a second movable frame, and the second movable frame is disposed to move in the second direction along a guide portion of the second fixed frame.

## Description

### Technical Field

The present disclosure relates to a vehicle display device, and more particularly, to a vehicle display device in which a display part is implemented to be movable in different directions.

### Background Art

A vehicle is an apparatus that moves in a direction desired by a user who gets on board. A representative example is an automobile.

Meanwhile, for the convenience of the user using the vehicle, there is a trend in which various sensors, electronic apparatuses, and the like are provided. In particular, research on an advanced driver assistance system (ADAS) is being actively carried out for the user's convenience in driving. Furthermore, development of autonomous vehicles is being actively carried out.

In addition, as spending more time in the vehicle, there is a growing trend of users no longer viewing the vehicle merely as a means of transportation, but rather perceiving it as a space. Accordingly, research is being conducted to provide various infotainment environments more realistically by using a large display within the vehicle.

There is a need for all passengers in the vehicle to use the display installed for convenience in a more convenient and selective manner depending on the situation.

### Disclosure of Invention

### Technical Problem

An aspect of the present disclosure is to solve the foregoing and other problems.

According to some embodiments of the present disclosure, an aspect thereof is to provide a movable vehicle display device that allows both a driver and an occupant in a passenger seat of a vehicle to conveniently and selectively control the screen.

Additionally, according to some embodiments of the present disclosure, an aspect thereof is to provide a movable vehicle display device that allows a driver and an occupant in a passenger seat of a vehicle to control movement with a simple and intuitive manipulation without changing their posture.

Additionally, according to some embodiments of the present disclosure, an aspect thereof is to provide a vehicle display device that is structured to provide a variable driving force that changes a distance and/or a speed of movement of a display to automatically control the screen based on a position change of the display.

### Solution to Problem

To this end, a vehicle display device according to an embodiment of the present disclosure is implemented so as to allow a display to move in different directions according to an operation of a plurality of driving modules.

The vehicle display device can operate such that a display part moves between a passenger seat and a driver's seat of a vehicle according to an operation of a first drive module, and can operate such that the display part is exposed out of an internal space thereof or slid thereinto and hidden according to an operation of a second drive module.

Specifically, a vehicle display device according to an embodiment of the present disclosure can include a display part arranged in a housing having a slot and coupled to a plurality of drive units operating in different directions so as to be movable in different directions; and a control part that controls an operation of each of the display part and the plurality of drive units. Additionally, the plurality of drive units include a first drive unit operating to move the display part in a first direction, and a second drive unit operating to move the display part in a second direction different from the first direction such that the display part is slid into or slid out the slot therethrough so as to increase or decrease its exposed area. Here, the first drive unit can include a first fixed frame and a first movable frame arranged on a rear surface of the display part, and the first movable frame can be arranged to move in the first direction along a guide part of the first fixed frame, and the second drive unit can be arranged in the first movable frame and can include a second fixed frame and a second movable frame, and the second movable frame can be arranged to move in the second direction along a guide part of the second fixed frame. According to such a structure, the display part can be arranged on a front surface of the first and second movable frames, and controlled to move along a direction of movement of each movable frame.

In an embodiment, the first drive unit can include a first cableveyor that moves in the first direction in conjunction with the first movable frame, the second drive unit can include a second cableveyor that moves in the second direction in conjunction with the second movable frame, and each cableveyor can include a plurality of unit chains connected to be mutually rotatable.

In an embodiment, the first drive unit can further include a first drive motor arranged on a rear surface of the first movable frame, and the first drive motor can apply a driving force to a rack and pinion gear module in conjunction therewith so as to operate the first movable frame to move in the first direction along the guide part of the first fixed frame.

In an embodiment, the control part can control electrical power applied to the first drive motor to control at least one of a distance and speed of movement of the first movable frame.

In an embodiment, the second drive unit can further include a second drive motor arranged on a rear surface of the second movable frame, and the second drive motor can apply a driving force to a timing pulley and belt gear module in conjunction therewith so as to operate the second movable frame to move in the second direction along the guide part of the second fixed frame.

In an embodiment, the control part can control electrical power applied to the second drive motor to control at least one of a distance and speed of movement of the second movable frame.

In an embodiment, the vehicle display device can further include a manipulation unit spaced apart from the display part to generate a signal matching the operation of the plurality of drive units according to a manipulation applied thereto, wherein the manipulation unit includes a first direction manipulation module that generates a signal matching the operation of the first drive unit, and a second direction manipulation module that generates a signal matching the operation of the second drive unit. Additionally, the control part can transmit a signal generated by the manipulation unit to each drive unit so as to control the drive unit corresponding thereto to operate.

In an embodiment, the first direction manipulation module can include a third fixed frame and a third movable frame located above the third fixed frame, wherein the third movable frame is arranged to move horizontally along a guide part of the third fixed frame.

In an embodiment, the first direction manipulation module can further include a third cableveyor that moves horizontally in conjunction with the third movable frame, and a rack and pinion gear engaging with each other based on an external force applied thereto and operating to allow the third movable frame to move horizontally along the guide part of the third fixed frame.

In an embodiment, the control part can control a first movable frame of the first drive unit to move in the first direction along the guide part of the first fixed frame based on a first signal generated according to a horizontal movement of the third movable frame.

In an embodiment, the second direction manipulation module can include a fourth fixed frame and a fourth movable frame connected to one side of the third fixed frame, wherein the fourth movable frame is configured to be tiltable in response to the driving of a tilting hinge arranged thereinside.

In an embodiment, the control part can control the second movable frame of the second drive unit to move in the second direction along the guide part of the second fixed frame based on a second signal generated according to a tilting of the fourth movable frame.

In an embodiment, the vehicle display device can further include a first sensor that detects a position of the first movable frame based on the first fixed frame. Additionally, the control part can determine a relative position of the first movable frame based on a sensing value of the first sensor.

In an embodiment, the control part can control a screen of the display part based on the determined relative position of the first movable frame.

In an embodiment, the vehicle display device can further include a second sensor that detects a position of the second movable frame based on the second fixed frame. Additionally, the control part can determine a relative position of the second movable frame based on a sensing value of the second sensor.

In an embodiment, the control part can control a screen of the display part based on the determined relative position of the second movable frame.

### Advantageous Effects of Invention

According to a vehicle display device of the present disclosure, a plurality of drive units can be implemented to operate in different directions, thereby controlling a display mounted on the drive units to move in different directions.

In addition, according to a vehicle display device of the present disclosure, a motor and a connection element can be provided to provide a driving force for each of a plurality of drive units so as to adjust the driving force of the motor, thereby controlling a distance and/or speed of movement of a display to change.

In addition, according to a vehicle display device of the present disclosure, a display can be intuitively moved according to various user manipulations on a console for controlling the movement of the display.

Furthermore, according to a vehicle display device of the present disclosure, a display can detect a change in position through a sensor provided in each of a plurality of drive units and perform screen control accordingly.

### Brief Description of Drawings

FIG. 1 is a block diagram referenced to describe a display device of a vehicle related to an embodiment of the present disclosure.
FIG. 2 is a block diagram for explaining a detailed configuration of a vehicle display device according to an embodiment of the present disclosure.
FIG. 3 is a drawing showing a vehicle display device installed within a vehicle according to an embodiment of the present disclosure.
FIGS. 4A and 4B are exemplary drawings for explaining a vehicle display device moving in different directions according to an embodiment of the present disclosure.
FIGS. 5A and 5B illustrate a structure and detailed configuration of a first drive module for moving a vehicle display device in a first direction according to an embodiment of the present disclosure.
FIGS. 6A and 6B illustrate a structure and detailed configuration of a second drive module for moving a vehicle display device in a second direction different from the first direction according to an embodiment of the present disclosure.
FIG. 7 is a drawing for explaining a console that controls a movement of a vehicle display device according to an embodiment of the present disclosure.
FIGS. 8A and 8B illustrate a structure and detailed configuration of a first manipulation module for moving a console left and right according to an embodiment of the present disclosure.
FIGS. 9A and 9B illustrate a structure and detailed configuration of a second manipulation module for tilting a console up and down according to an embodiment of the present disclosure.
FIGS. 10A and 10B are drawings for explaining a structure in which a vehicle display device according to an embodiment of the present disclosure detects a position when moving in a first direction according to an operation of a first drive module.
FIGS. 11A and 11B are drawings for explaining a structure in which a vehicle display device according to an embodiment of the present disclosure detects a position when moving in a second direction according to an operation of a second drive module.

### Mode for the Invention

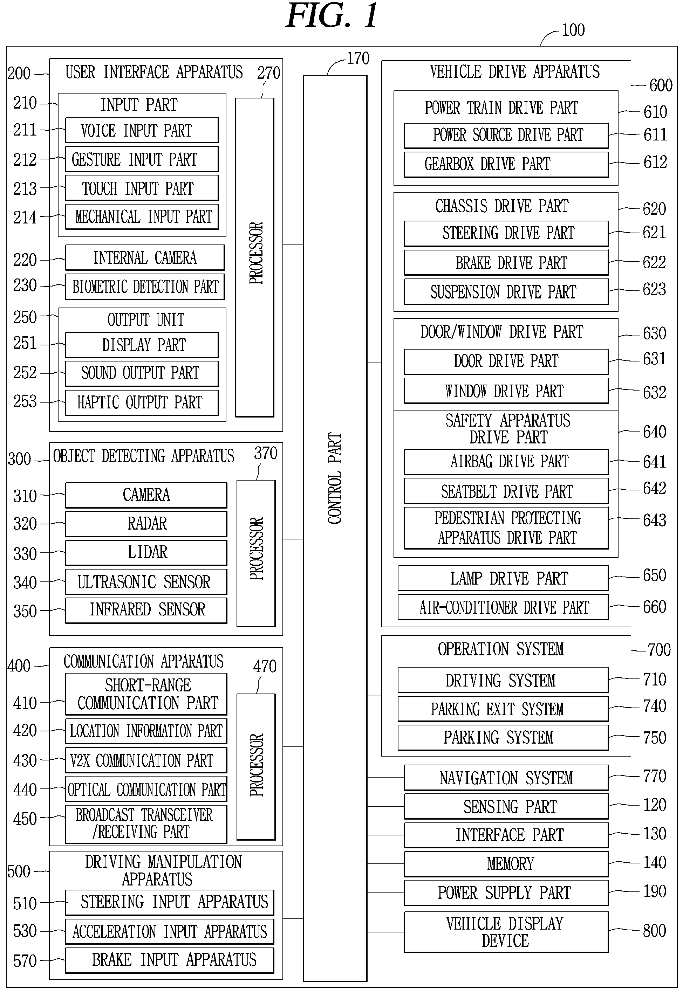

FIG. 1 is a block diagram referenced to describe a vehicle related to an embodiment of the present disclosure.

Referring to FIG. 1, a vehicle 100 can include a wheel that rotates by a power source and a steering input apparatus 510 for adjusting a direction of travel of the vehicle 100.

The vehicle 100 can be an autonomous driving vehicle. The vehicle 100 can be switched into an autonomous driving mode or a manual mode based on a user input. For example, the vehicle 100 can be converted from the manual mode into the autonomous driving mode or from the autonomous driving mode into the manual mode based on a user input received through a user interface apparatus (hereinafter, referred to as a 'user terminal') 200.

The vehicle 100 can be switched into the autonomous driving mode or the manual mode based on driving environment information. Driving situation information can be generated based on object information provided by an object detection apparatus 300. For example, the vehicle 100 can be switched from the manual mode into the autonomous driving mode or from the autonomous driving mode into the manual mode based on driving environment information generated in the object detection apparatus 300. In an example, the vehicle 100 can be switched from the manual mode into the autonomous driving mode or from the autonomous driving mode into the manual mode based on driving environment information received through a communication apparatus 400.

The vehicle 100 can be switched from the manual mode into the autonomous driving mode or from the autonomous driving mode into the manual mode based on information, data or signal provided from an external device.

When the vehicle 100 can be operated in the autonomous driving mode, the autonomous driving vehicle 100 can be operated based on an operation system 700. For example, the autonomous driving vehicle 100 can be driven based on information, data or signal generated in a driving system 710, a parking exit system 740 and a parking system 750.

When the vehicle 100 is driven in the manual mode, the autonomous driving vehicle 100 can receive a user input for driving through a driving manipulation apparatus 500. The vehicle 100 can be driven based on the user input received through the driving manipulation apparatus 500.

An overall length refers to a length from a front end to a rear end of the vehicle 100, a width refers to a width of the vehicle 100, and a height refers to a length from a bottom of a wheel to a roof. In the following description, an overall-length direction L can refer to a direction which is a criterion for measuring the overall length of the vehicle 100, a width direction W can refer to a direction that is a criterion for measuring a width of the vehicle 100, and a height direction H can refer to a direction that is a criterion for measuring a height of the vehicle 100.

As illustrated in FIG. 1, the vehicle 100 can include a user interface apparatus (hereinafter, referred to as a 'user terminal') 200, an object detection apparatus 300, a communication apparatus 400, a driving manipulation apparatus 500, a vehicle drive apparatus 600, an operation system 700, a navigation system 770, a sensing part 120, an interface part 130, a memory 140, a control part 170, and a power supply part 190.

According to embodiments, the vehicle 100 can include more components in addition to components to be explained in this specification or can not include some of those components to be explained in this specification.

The user interface apparatus 200 is an apparatus for communication between the vehicle 100 and a user. The user interface apparatus 200 can receive a user input and provide information generated in the vehicle 100 to the user. The vehicle 100 can implement a user interface (UI) or user experience (UX) through a user interface apparatus (hereinafter, referred to as a 'user terminal') 200.

The user interface apparatus 200 can include an input part 210, an internal camera 220, a biometric detection part 230, an output part 250, and a processor 270. According to embodiments, the user interface apparatus 200 can include more components in addition to components to be explained in this specification or can not include some of those components to be explained in this specification.

The input part 210 can allow the user to input information, and data collected in the input part 210 can be analyzed by the processor 270 and processed as a user's control command.

The input part 210 can be arranged within the vehicle. For example, the input part 210 can be arranged on one area of a steering wheel, one area of an instrument panel, one area of a seat, one area of each pillar, one area of a door, one area of a center console, one area of a headlining, one area of a sun visor, one area of a windshield, one area of a window, or the like.

The input part 210 can include a voice input part 211, a gesture input part 212, a touch input part 213, and a mechanical input part 214.

The audio input part 211 can convert a user's voice input into an electric signal. The converted electric signal can be provided to the processor 270 or the control part 170. The audio input part 211 can include at least one microphone.

The gesture input part 212 can convert a user's gesture input into an electric signal. The converted electric signal can be provided to the processor 270 or the control part 170.

The gesture input part 212 can include at least one of an infrared sensor and an image sensor for detecting the user's gesture input. According to an embodiment, the gesture input part 212 can detect a user's three-dimensional (3D) gesture input. To this end, the gesture input part 212 can include a light output part outputting a plurality of infrared rays or a plurality of image sensors.

The gesture input part 212 can detect the user's 3D gesture input by a time of flight (TOF) method, a structured light method or a disparity method.

The touch input part 213 can convert the user's touch input into an electric signal. The converted electric signal can be provided to the processor 270 or the control part 170.

The touch input part 213 can include a touch sensor for detecting the user's touch input. According to an embodiment, the touch input part 213 can be integrated with the display part 251 so as to implement a touch screen. The touch screen can provide an input interface and an output interface between the vehicle 100 and the user.

The mechanical input part 214 can include at least one of a button, a dome switch, a jog wheel, and a jog switch. An electric signal generated by the mechanical input part 214 can be provided to the processor 270 or the control part 170. The mechanical input part 214 can be arranged on a steering wheel, a center fascia, a center console, a cockpit module, a door and the like.

The internal camera 220 can acquire an internal image of the vehicle. The processor 270 can detect a user's state based on the internal image of the vehicle. The processor 270 can acquire information related to the user's gaze from the internal image of the vehicle. The processor 270 can detect a user gesture from the internal image of the vehicle.

The biometric detection part 230 can acquire the user's biometric information. The biometric detection part 230 can include a sensor for detecting the user's biometric information and acquire fingerprint information and heart rate information regarding the user using the sensor. The biometric information can be used for user authentication.

The output part 250 can generate an output related to a visual, auditory or tactile signal. The output part 250 can include at least one of a display part 251, a sound output part 252 and a haptic output part 253.

The display part 251 can output graphic objects corresponding to various types of information. The display part 251 can include at least one of a liquid crystal display (LCD), a thin film transistor-LCD (TFT LCD), an organic light-emitting diode (OLED), a flexible display, a three-dimensional (3D) display and an e-ink display.

The display part 251 can be inter-layered or integrated with a touch input part 213 to implement a touch screen.

The display part 251 can be implemented as a head-up display (HUD). When the display part 251 is implemented as the HUD, the display part 251 can be provided with a projecting module so as to output information through an image which is projected on a windshield or a window.

The display part 251 can include a transparent display. The transparent display can be attached to the windshield or the window. The transparent display can display a predetermined screen with a predetermined transparency. In order to achieve transparency, the transparent display can include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display can be adjustable.

Meanwhile, the user interface apparatus 200 can include a plurality of display parts 251a to 251g.

The display part 251 can be arranged on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The sound output part 252 can convert an electric signal provided from the processor 270 or the control part 170 into an audio signal for output. To this end, the sound output part 252 can include at least one speaker.

The haptic output part 253 generates a tactile output. For example, the haptic output part 253 can vibrate a steering wheel, a safety belt, a seat 110FL, 110FR, 110RL, 110RR to allow the user to recognize such an output.

The processor (hereinafter, referred to as a 'control part') 270 can control an overall operation of each unit of the user interface apparatus 200. According to an embodiment, the user interface apparatus 200 can include a plurality of processors 270 or can not include any processor 270.

When the processor 270 is not included in the user interface apparatus 200, the user interface apparatus 200 can operate according to a control of a processor of another apparatus within the vehicle 100 or the control part 170.

Meanwhile, the user interface apparatus 200 can be called as a vehicle display device. The user interface apparatus 200 can operate according to the control of the control part 170.

The object detection apparatus 300 is an apparatus for detecting an object located at outside of the vehicle 100. The object can be a variety of objects associated with driving (operation) of the vehicle 100. The object can include an lanes, another vehicle, a pedestrian, a two-wheeled vehicle, a traffic signal, light, a road, a structure, a speed bump, a terrain feature, an animal, and the like

The road can include a road surface, a curve, an upward slope, a downward slope and the like.

The structure can be an object that is located near a road and fixed on the ground. For example, the structure can include a streetlamp, a roadside tree, a building, an electric pole, a traffic light, a bridge and the like.

The terrain feature can include a mountain, a hill and the like.

Meanwhile, objects can be classified into a moving object and a fixed object. For example, the moving object can be a concept including another vehicle and a pedestrian. The fixed object can be a concept including a traffic signal, a road and a structure.

The object detection apparatus 300 can include a camera 310, a radar 320, a lidar 330, an ultrasonic sensor 340, an infrared sensor 350 and a processor 370.

According to an embodiment, the object detection apparatus 300 can further include other components in addition to the components described, or can not include some of the components described.

The camera 310 can be located on an appropriate portion outside the vehicle to acquire an external image of the vehicle. The camera 310 can be a mono camera, a stereo camera 310a, an AVM (Around View Monitoring) camera 310b, or a 360-degree camera.

For example, the camera 310 can be arranged in the interior of the vehicle, in close proximity to a front windshield, to acquire an image on the front of the vehicle. Or, the camera 310 can be arranged adjacent to a front bumper or a radiator grill.

For example, the camera 310 can be arranged in the interior of the vehicle, in close proximity to a rear glass, to acquire an image on the rear of the vehicle. Or, the camera 310 can be arranged adjacent to a rear bumper, a trunk or a tail gate.

For example, the camera 310 can be arranged in close proximity to at least one of side windows in the interior of the vehicle to acquire an image on the side of the vehicle. Or, the camera 310 can be arranged adjacent to a side mirror, a fender or a door.

The camera 310 can provide an acquired image to the processor 370.

The radar 320 can include electric wave transmitting and receiving portions. The radar 320 can be implemented as a pulse radar or a continuous wave radar according to a principle of emitting electric waves. The radar 320 can be implemented in a frequency modulated continuous wave (FMCW) manner or a frequency shift keying (FSK) manner according to a signal waveform, among the continuous wave radar methods.

The radar 320 can detect an object in a time of flight (TOF) manner or a phase-shift manner through the medium of electromagnetic waves, and detect a position of the detected object, a distance from the detected object and a relative speed with the detected object.

The radar 320 can be arranged on an appropriate position outside the vehicle for detecting an object which is located on the front, rear or side of the vehicle.

The lidar 330 can include laser transmitting and receiving portions. The lidar 330 can be implemented in a time of flight (TOF) manner or a phase-shift manner.

The lidar 330 can be implemented as a drive type or a non-drive type.

For the drive type, the lidar 330 can be rotated by a motor and detect object near the vehicle 100.

For the non-drive type, the lidar 330 can detect, through light steering, objects which are located within a predetermined range based on the vehicle 100. The vehicle 100 can include a plurality of non-drive type lidars 330.

The lidar 330 can detect an object in a time of flight (TOF) manner or a phase-shift manner through the medium of laser light, and detect a position of the detected object, a distance from the detected object and a relative speed with the detected object.

The lidar 330 can be arranged on an appropriate position outside the vehicle for detecting an object located on the front, rear or side of the vehicle.

The ultrasonic sensor 340 can include ultrasonic wave transmitting and receiving portions. The ultrasonic sensor 340 can detect an object based on an ultrasonic wave, and detect a position of the detected object, a distance from the detected object and a relative speed with the detected object.

The ultrasonic sensor 340 can be arranged on an appropriate position outside the vehicle for detecting an object located on the front, rear or side of the vehicle.

The infrared sensor 350 can include infrared light transmitting and receiving portions. The infrared sensor 340 can detect an object based on infrared light, and detect a position of the detected object, a distance from the detected object and a relative speed with the detected object.

The infrared sensor 350 can be arranged on an appropriate position outside the vehicle for detecting an object located on the front, rear or side of the vehicle.

The processor 370 can control an overall operation of each unit of the object detection apparatus 300.

The processor 370 can detect an object based on an acquired image, and track the object. The processor 370 can execute operations, such as a calculation of a distance from the object, a calculation of a relative speed with the object and the like, through an image processing algorithm.

The processor 370 can detect an object based on a reflected electromagnetic wave which an emitted electromagnetic wave is reflected from the object, and track the object. The processor 370 can execute operations, such as a calculation of a distance from the object, a calculation of a relative speed with the object and the like, based on the electromagnetic wave.

The processor 370 can detect an object based on a reflected laser beam which an emitted laser beam is reflected from the object, and track the object. The processor 370 can execute operations, such as a calculation of a distance from the object, a calculation of a relative speed with the object and the like, based on the laser beam.

The processor 370 can detect an object based on a reflected ultrasonic wave which an emitted ultrasonic wave is reflected from the object, and track the object. The processor 370 can execute operations, such as a calculation of a distance from the object, a calculation of a relative speed with the object and the like, based on the ultrasonic wave.

The processor 370 can detect an object based on reflected infrared light which emitted infrared light is reflected from the object, and track the object. The processor 370 can execute operations, such as a calculation of a distance from the object, a calculation of a relative speed with the object and the like, based on the infrared light.

According to an embodiment, the object detection apparatus 300 can include a plurality of processors 370 or can not include any processor 370. For example, each of the camera 310, the radar 320, the lidar 330, the ultrasonic sensor 340 and the infrared sensor 350 can include the processor in an individual manner.

When the processor 370 is not included in the object detection apparatus 300, the object detection apparatus 300 can operate according to the control of a processor of an apparatus within the vehicle 100 or the control part 170.

The object detection apparatus 400 can operate according to the control of the control part 170.

The communication apparatus 400 is an apparatus for performing communication with an external device. Here, the external device can be another vehicle, a mobile terminal or a server.

The communication apparatus 400 can perform the communication by including at least one of a transmitting antenna, a receiving antenna, and radio frequency (RF) circuit and RF device for implementing various communication protocols.

The communication apparatus 400 can include a short-range communication part 410, a location information part 420, a V2X communication part 430, an optical communication part 440, a broadcast transmitting/receiving part 450 and a processor 470.

According to an embodiment, the communication apparatus 400 can further include other components in addition to the components described, or can not include some of the components described.

The short-range communication part 410 is a unit for facilitating short-range communications. The short-range communication part 410 can support short-range communication using at least one of Bluetooth^{™}, Radio Frequency Identification (RFID), Infrared Data Association (IrDA), Ultra Wideband (UWB), ZigBee, Near field communication (NFC), Wireless-Fidelity (Wi-Fi), Wi-Fi Direct, Wireless Universal Serial Bus (Wireless USB), and the like.

The short-range communication part 410 can construct short-range area networks to perform short-range communication between the vehicle 100 and at least one external device.

The location information part 420 is a unit for acquiring position information. For example, the location information part 420 can include a Global Positioning System (GPS) module or a Differential Global Positioning System (DGPS) module.

The V2X communication part 430 is a unit for performing wireless communications with a server (vehicle to infrastructure; V2I), another vehicle (vehicle to vehicle; V2V), or a pedestrian (vehicle to pedestrian; V2P). The V2X communication part 430 can include an RF circuit capable of implementing a communication protocol with an infrastructure (V2I), a communication protocol between vehicles (V2V) and a communication protocol with a pedestrian (V2P).

The optical communication part 440 is a unit for performing communication with an external device through the medium of light. The optical communication part 440 can include a light-emitting diode for converting an electric signal into an optical signal and sending the optical signal to the exterior, and a photodiode for converting the received optical signal into an electric signal.

According to an embodiment, the optical transmission part can be formed integrally with lamps provided on the vehicle 100.

The broadcast transmitting/receiving part 450 is a unit for receiving a broadcast signal from an external broadcast managing entity or transmitting a broadcast signal to the broadcast managing entity via a broadcast channel. The broadcast channel can include a satellite channel, a terrestrial channel, or both. The broadcast signal can include a TV broadcast signal, a radio broadcast signal and a data broadcast signal.

The processor 470 can control an overall operation of each unit of the communication apparatus 400.

According to an embodiment, the communication apparatus 400 can include a plurality of processors 470 or can not include any processor 470.

When the processor 470 is not included in the communication apparatus 400, the communication apparatus 400 can operate according to the control of a processor of another apparatus within the vehicle 100 or the control part 170.

Meanwhile, the communication apparatus 400 can implement a vehicle display device together with the user interface apparatus 200. In this instance, the display device for the vehicle can be referred to as a telematics device or an Audio Video Navigation (AVN) device.

The communication apparatus 400 can operate according to the control of the control part 170.

The driving manipulation apparatus 500 is an apparatus for receiving a user input for driving.

In a manual mode, the vehicle 100 can be operated based on a signal provided by the driving manipulation apparatus 500.

The driving manipulation apparatus 500 can include a steering input apparatus 510, an acceleration input apparatus 530 and a brake input apparatus 570.

The steering input apparatus 510 can receive an input regarding a driving (ongoing) direction of the vehicle 100 from the user. The steering input apparatus 510 is preferably configured in the form of a wheel allowing a steering input in a rotating manner. According to an embodiment, the steering input apparatus can also be configured in a shape of a touch screen, a touchpad, or a button.

The acceleration input apparatus 530 can receive an input for accelerating the vehicle 100 from the user. The brake input apparatus 570 can receive an input for braking the vehicle 100 from the user. Each of the acceleration input apparatus 530 and the brake input apparatus 570 is preferably configured in the form of a pedal. According to an embodiment, the acceleration input apparatus or the brake input apparatus can also be configured in the form of a touch screen, a touch pad or a button.

The driving manipulation apparatus 500 can operate according to the control of the control part 170.

The vehicle drive apparatus 600 is an apparatus for electrically controlling the driving of various apparatuses within the vehicle 100.

The vehicle drive apparatus 600 can include a power train drive part 610, a chassis drive part 620, a door/window drive part 630, a safety apparatus drive part 640, a lamp drive part 650, and an air-conditioner drive part 660.

According to an embodiment, the vehicle drive apparatus 600 can further include other components in addition to the components described, or can not include some of the components described.

Meanwhile, the vehicle drive apparatus 600 can include a processor. Each unit of the vehicle drive apparatus 600 can individually include a processor.

The power train drive part 610 can control an operation of a power train apparatus.

The power train drive part 610 can include a power source drive part 611 and a gearbox drive part 612.

The power source drive part 611 can perform a control for a power source of the vehicle 100.

For example, upon using a fossil fuel-based engine as the power source, the power source drive part 611 can perform an electronic control for the engine. Accordingly, an output torque and the like of the engine can be controlled. The power source drive part 611 can adjust the engine output torque according to the control of the control part 170.

For example, upon using an electric energy-based motor as the power source, the power source drive part 611 can perform a control for the motor. The power source drive part 611 can adjust a rotating speed, a torque and the like of the motor according to the control of the control part 170.

The gearbox drive part 612 can perform a control for a gearbox. The gearbox drive part 612 can adjust a state of the gearbox. The gearbox drive part 612 can change the state of the gearbox into drive (forward) (D), reverse (R), neutral (N) or parking (P).

Meanwhile, when an engine is the power source, the gearbox drive part 612 can adjust a locked state of a gear in the drive (D) state.

The chassis drive part 620 can control an operation of a chassis apparatus. The chassis drive part 620 can include a steering drive part 621, a brake drive part 622 and a suspension drive part 623.

The steering drive part 621 can perform an electronic control for a steering apparatus within the vehicle 100. The steering drive part 621 can change a driving direction of the vehicle.

The brake drive part 622 can perform an electronic control for a brake apparatus within the vehicle 100. For example, the brake drive part 622 can control an operation of brakes provided at wheels to reduce speed of the vehicle 100.

Meanwhile, the brake drive part 622 can individually control each of a plurality of brakes. The brake drive part 622 can differently control braking force applied to each of a plurality of wheels.

The suspension drive part 623 can perform an electronic control for a suspension apparatus within the vehicle 100. For example, the suspension drive part 623 can control the suspension apparatus to reduce vibration of the vehicle 100 when a bump is present on a road. Meanwhile, the suspension drive part 623 can individually control each of a plurality of suspensions.

The door/window drive part 630 can perform an electronic control for a door apparatus or a window apparatus within the vehicle 100.

The door/window drive part 630 can include a door drive part 631 and a window drive part 632.

The door drive part 631 can perform the control for the door apparatus. The door drive part 631 can control opening or closing of a plurality of doors of the vehicle 100. The door drive part 631 can control opening or closing of a trunk or a tail gate. The door drive part 631 can control opening or closing of a sunroof.

The window drive part 632 can perform the electronic control for the window apparatus. The window drive part 632 can control opening or closing of a plurality of windows of the vehicle 100.

The safety apparatus drive part 640 can perform an electronic control for various safety apparatuses within the vehicle 100.

The safety apparatus drive part 640 can include an airbag drive part 641, a seatbelt drive part 642 and a pedestrian protecting apparatus drive part 643.

The airbag drive part 641 can perform an electronic control for an airbag apparatus within the vehicle 100. For example, the airbag drive part 641 can control the airbag to be deployed upon a detection of a risk.

The seatbelt drive part 642 can perform an electronic control for a seatbelt apparatus within the vehicle 100. For example, the seatbelt drive part 642 can control passengers to be motionlessly seated in seats 110FL, 110FR, 110RL, 110RR using seatbelts upon a detection of a risk.

The pedestrian protecting apparatus drive part 643 can perform an electronic control for a hood lift and a pedestrian airbag. For example, the pedestrian protecting apparatus drive part 643 can control the hood lift and the pedestrian airbag to be open up upon detecting pedestrian collision.

The lamp drive part 650 can perform an electronic control for various lamp apparatuses within the vehicle 100.

The air-conditioner drive part 660 can perform an electronic control for an air conditioner within the vehicle 100. For example, the air-conditioner drive part 660 can control the air conditioner to supply cold air into the vehicle when internal temperature of the vehicle is high.

The vehicle drive apparatus 600 can include a processor. Each unit of the vehicle drive apparatus 600 can individually include a processor.

The vehicle drive apparatus 600 can operate according to the control of the control part 170.

The operation system 700 is a system that controls various driving modes of the vehicle 100. The operation system 700 can be operated in the autonomous driving mode.

The operation system 700 can include a driving system 710, a parking exit system 740 and a parking system 750.

According to an embodiment, the operation system 700 can further include other components in addition to the components described, or can not include some of the components described.

Meanwhile, the operation system 700 can include a processor. Each unit of the operation system 700 can individually include a processor.

According to an embodiment, the operation system 700 can be a sub concept of the control part 170 when it is implemented in a software configuration.

Meanwhile, according to an embodiment, the operation system 700 can be a concept including at least one of the user interface apparatus 200, the object detection apparatus 300, the communication apparatus 400, the vehicle drive apparatus 600, and the control part 170.

The driving system 710 can perform driving of the vehicle 100.

The driving system 710 can receive navigation information from a navigation system 770, transmit a control signal to the vehicle drive apparatus 600, and perform driving of the vehicle 100. The driving system 710 can receive object information from the object detection apparatus 300, transmit a control signal to the vehicle drive apparatus 600 and perform driving of the vehicle 100. The driving system 710 can receive a signal from an external device through the communication apparatus 400, transmit a control signal to the vehicle drive apparatus 600, and perform the driving of the vehicle 100.

The parking exit system 740 can perform an exit of the vehicle 100 from a parking lot.

The parking exit system 740 can receive navigation information from the navigation system 770, transmit a control signal to the vehicle drive apparatus 600, and perform the exit of the vehicle 100 from the parking lot. The parking exit system 740 can receive object information from the object detection apparatus 300, transmit a control signal to the vehicle drive apparatus 600 and perform the exit of the vehicle 100 from the parking lot. The parking exit system 740 can receive a signal from an external device through the communication apparatus 400, transmit a control signal to the vehicle drive apparatus 600, and perform the exit of the vehicle 100 from the parking lot.

The parking system 750 can perform parking of the vehicle 100.

The parking system 750 can receive navigation information from the navigation system 770, transmit a control signal to the vehicle drive apparatus 600, and park the vehicle 100. The parking system 750 can receive object information from the object detection apparatus 300, transmit a control signal to the vehicle drive apparatus 600 and park the vehicle 100. The parking system 750 can receive a signal from an external device through the communication apparatus 400, transmit a control signal to the vehicle drive apparatus 600, and park the vehicle 100.

The navigation system 770 can provide navigation information. The navigation information can include at least one of map information, information regarding a set destination, path information according to the set destination, information regarding various objects on a path, lane information and current location information of the vehicle.

The navigation system 770 can include a memory and a processor. The memory can store the navigation information. The processor can control an operation of the navigation system 770.

According to an embodiment, the navigation system 770 can update previously stored information by receiving information from an external apparatus through the communication apparatus 400.

According to an embodiment, the navigation system 770 can be classified as a sub component of the user interface apparatus 200.

The sensing part 120 can sense a status of the vehicle. The sensing part 120 can include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing part 120 can acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing part 120 can further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface part 130 can serve as a path allowing the vehicle 100 to interface with various types of external devices connected thereto. For example, the vehicle interface part 130 can be provided with a port connectable with a mobile terminal, and connected to the mobile terminal through the port. In this instance, the interface part 130 can exchange data with the mobile terminal.

Meanwhile, the vehicle interface part 130 can serve as a path for supplying electric energy to the connected mobile terminal. When the mobile terminal is electrically connected to the vehicle interface part 130, the vehicle interface part 130 supplies electric energy supplied from a power supply part 190 to the mobile terminal according to the control of the control part 170.

The memory 140 is electrically connected to the control part 170. The memory 140 can store basic data for units, control data for controlling operations of units and input/output data. The memory 140 can be various storage apparatuses such as a ROM, a RAM, an EPROM, a flash drive, a hard drive, and the like in terms of hardware. The memory 140 can store various data for overall operations of the vehicle 100, such as programs for processing or controlling the control part 170.

According to an embodiment, the memory 140 can be integrated with the control part 170 or implemented as a sub component of the control part 170.

The control part 170 can control an overall operation of each unit of the vehicle 100. The control part 170 can be referred to as an Electronic Control Unit (ECU).

The power supply part 190 can supply power for an operation of each component according to the control of the control part 170. Specifically, the power supply part 190 can receive power supplied from an internal battery of the vehicle, and the like.

At least one processor and the control part 170 included in the vehicle 100 can be implemented using at least one of application specific integrated circuits (ASICs), digital signal processors (DSPs), digital signal processing devices (DSPDs), programmable logic devices (PLDs), field programmable gate arrays (FPGAs), processors, control parts, micro control parts, microprocessors, and electric units performing other functions.

Meanwhile, in embodiments of the present disclosure, a 'driver', 'occupant', 'driver or occupant (driver/occupant)' refers to a driver, passenger, co-passenger, occupant, or the like who is on board a vehicle capable of autonomous driving according to an embodiment of the present disclosure, and can be one or more.

Additionally, in embodiments of the present disclosure, the term 'vehicle' is used to refer to a vehicle capable of performing autonomous driving by artificial intelligence (AI) or a vehicle capable of receiving such services. In addition, in embodiments of the present disclosure, the 'vehicle' can be freely switched between manual driving, fully autonomous driving, and semi-autonomous driving by a driver.

In embodiments of the present disclosure, a 'vehicle display device', which is a display device arranged in a front seat of the vehicle 100, can be formed to be movable in different directions.

The vehicle display device can be used to refer to a movable center information display (CID), include both a movable CID and a head unit display (HUD), or include a movable CID, a HUD, and a manipulation unit related to the movement of the CID.

The vehicle display device can be formed so as to allow a display to move in different directions.

The vehicle display device includes a display for displaying various screens, and can control a screen displayed on the HUD through that display. Additionally, the vehicle display device can be implemented so as to allow the CID to be movable to control the screen displayed on the HUD.

The vehicle display device can generate a signal for moving the CID according to the manipulation of a manipulation unit installed at another location in the vehicle.

The vehicle display device can be activated or deactivated as it moves in different directions from a front seat of the vehicle, and can be used as a flexible controller that can be used by an occupant in the driver's seat or controlled by an occupant in the passenger seat.

Additionally, the vehicle display device can operate to switch a screen of the HUD as moving in different directions from the front seat of the vehicle.

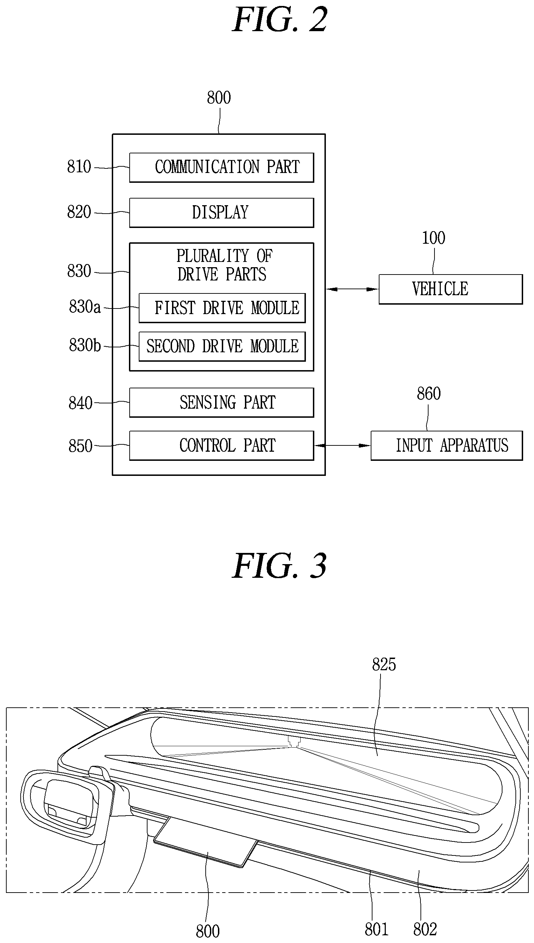

FIG. 2 is a block diagram for explaining a vehicle display device 800 related to an embodiment of the present disclosure.

In FIG. 2, the vehicle display device 800 can communicate with the components of the vehicle 100 and can be installed, for example, in a front seat inside the vehicle 100.

The vehicle display device 800 of FIG. 2 can include a communication part 810, a display part 820, a plurality of drive parts 830, a sensing part 830, and a control part 850. Additionally, the vehicle display device 800 can be understood to include an input apparatus 860 installed at another position in the vehicle 100. In this case, the vehicle display device 800 can receive a signal generated according to the manipulation of the input apparatus 860 and can perform an operation based on the received signal.

Additionally, although not shown, the vehicle display device 800 can include a second display that is controlled through an input/manipulation to the display part 820. The second display can be named a rectangular display mounted on a frame. When the second display (or rectangular display) is included as a component of the vehicle display device 800, a screen displayed on the second display can be controlled through the display part 820.

The communication part 810 can receive sensing values and/or control values from various apparatuses/systems such as the vehicle 100 and/or various sensors in the vehicle 100, an advanced driver assistance system (ADAS), a driver monitoring system (ADAS), and the like.

As an example, the communication part 810 can receive a drive signal for operating the plurality of drive parts 830 from the input apparatus 860 separately installed in the vehicle 100 as the control value. As another example, the communication part 810 can receive a sensing value as the above sensing value for operating or limiting the operation of the plurality of drive parts 830 in relation to driving safety.

The display part 820 is formed to display a screen and to be movable in different directions.

Specifically, the display part 820 can move between the driver's seat and the passenger seat of the vehicle 100 (a first direction of movement), or move to be slid into or exposed to the outside with respect to the provided frame (a second direction of movement). In this case, the movement in the first and second directions of movement is performed independently of each other.

The plurality of drive parts 830 can include a first drive module 830a and a second drive module 830 that operate to allow the display part 820 of the vehicle display device 800 to move in different directions.

The first drive module 830a and the second drive module 830b each operate independently according to different drive signals. Each of the first drive module 830a and the second drive module 830b provides a driving force to the display part 820 to move the display part 820 in different directions. To this end, the first drive module 830a and the second drive module 830b can each include a motor.

According to an embodiment, the first drive module 830a operates to move the display part 820 in a first direction. According to an embodiment, the second drive module 830b operates to move the display part 820 in a second direction different from the first direction.

Here, the first direction can be a direction of movement in which the display part 820 moves in a transverse direction (left-right direction), and the second direction can be a direction of movement in which the display part 820 moves in an up-down direction (longitudinal direction). Alternatively, the first direction can be a direction of movement in which the display part 820 moves between the driver's seat (or center) and the passenger seat of the vehicle, and the second direction can be a direction of movement in which the display part 820 moves to be slid into an internal space of the frame or exposed to the outside from the internal space.

The first drive module 830a can include a drive motor (hereinafter, referred to as a 'first drive motor') that drives the display part 820 to move in a transverse direction (left-right direction). Specifically, the first drive motor is driven by a control signal from the control part 850 that receives a first drive signal to move a movable frame included in the first drive module 830a in a transverse direction (left-right direction), thereby allowing the display part 820 mounted on the movable frame to move in a first direction.

The second drive module 830b can include a drive motor (hereinafter, referred to as a 'second drive motor') that drives the display part 820 to move in an up-down direction (longitudinal direction). Specifically, the second drive motor is driven by a control signal from the control part 850 that receives a second drive signal to move a movable frame included in the second drive module 830b in an up-down direction (longitudinal direction), thereby allowing the display part 820 mounted on the movable frame to moves in a second direction.

The first drive motor and the second drive motor can be arranged in different directions to provide driving forces for moving the display part 820 in different directions, respectively. For example, the first drive motor and the second drive motor can be arranged in directions orthogonal to each other.

Additionally, at least one of the first drive motor and the second drive motor is arranged in the same frame as the display part 820 so as to move together with the display part 820 as the frame moves.

Meanwhile, the control part 850 can control the first drive motor to generate a rotational force in different directions based on detailed direction information included in the first drive signal.

For example, by controlling the first drive motor to rotate in a first rotational direction, the display part 820 can be moved from the driver's seat (or center) toward the passenger seat. Additionally, for example, by controlling the first drive motor to rotate in a second rotational direction, the display part 820 can be moved from the passenger seat toward the driver's seat (or center).

Additionally, the control part 850 can control the second drive motor to generate a rotational force in different directions based on detailed direction information included in the second drive signal.

For example, by controlling the first drive motor to rotate in a first rotational direction, the display part 820 can be moved from the driver's seat (or center) toward the passenger seat. Additionally, for example, by controlling the first drive motor to rotate in a second rotational direction, the display part 820 can be moved from the passenger seat toward the driver's seat (or center).

The sensing part 830 can detect an input to the vehicle display device 800. Additionally, the sensing part 830 can detect a movement of the display part 820 according to the operation of the plurality of drive parts 830.

Additionally, the sensing part 830 can detect a distance of movement and a relative position of the display part 820 according to the driving of the first drive module 830a. Additionally, the sensing part 830 can detect a distance of movement and a relative position of the display part 820 according to the driving of the second drive module 830b.

The sensing part 830 can transmit a sensing value detected according to the operation of the plurality of drive parts 830 to the control part 850 to determine a distance of movement and a relative position of the display part 820.

Additionally, the sensing part 830 can detect whether the distance of movement and relative position of the display part 820 have reached a preset threshold distance and threshold position to transmit it to the control part 850.

When the display part 820 reaches the threshold distance and threshold position, the control part 850 can recognize that the display part 820 can no longer move in a direction exceeding the threshold distance and threshold position. Accordingly, upon receiving a drive signal for moving in a direction exceeding the threshold distance and threshold position, the control part 850 can control to perform an operation according to the movement restriction.

The control part 850 controls an overall operation of the vehicle display device 800. The control part 850 can communicate with the vehicle 100 to receive the sensing information and state information of the vehicle 100, and can transmit information regarding the state and operation of the vehicle display device 800 to the vehicle 100.

The control part 850 can generate a drive signal to drive the plurality of drive parts 830 for the movement of the display part 820. The control part 850 can generate a first drive signal to operate the first drive module 830a so as to allow the display part 820 to move in a first direction. Additionally, the control part 850 can generate a second drive signal to operate the second drive module 830b so as to allow the display part 820 to move in a second direction different from the first direction.

The control part 850 can control a screen displayed on the display part 820.

The control part 850 can control the operation of each of the plurality of drive parts 830 based on the first drive signal and/or second drive signal received through the communication part 810. Specifically, the control part 850 controls the driving of the first drive module 830a based on the first drive signal and controls the driving of the second drive module 830b based on the second drive signal.

The control part 850 controls the first drive module 830a to operate based on the first drive signal, thereby allowing the display part 820 to move in the first direction. In this case, the first direction includes detailed direction information. Based on detailed direction information of the first direction, the control part 850 controls the operation of the first drive module 830a so as to allow the display part 820 to move from the driver's seat (or center) to the passenger seat or from the passenger seat to the driver's seat (or center) of the vehicle 100.

Additionally, the control part 850 controls the first drive module 830b to operate based on the second drive signal, thereby allowing the display part 820 to move in the second direction. In this case, the second direction includes detailed direction information. Based on detailed direction information of the second direction, the control part 850 controls the operation of the second drive module 830b so as to allow the display part 820 to move to be exposed from an internal space of the frame of the vehicle 100 to the outside or to be slid into the internal space of the frame.

The input apparatus 860 can be implemented to receive a user manipulation for moving the display part 820. The input apparatus 860 can be installed at a position of the vehicle 100 different from that of the vehicle display device 800.

For example, the input apparatus 860 can be mounted so as to be parallel between the driver's seat and the passenger seat, and arranged so as to be spaced vertically apart from the vehicle display device 800. Additionally, for example, the input apparatus 860 can be mounted in a position that is convenient for occupants in the driver's seat and passenger seat to operate by hand without changing their posture.

Herein, the input apparatus 860 can also be named a 'console', 'console display', or 'input unit'. The input apparatus 860 can be used as an input apparatus to control a movement of the vehicle display device 800.

In an embodiment, the input apparatus 860 can be implemented as a separate apparatus from the vehicle display device 800. In this case, the input apparatus 860 and the vehicle display device 800 can perform wired/wireless communication so as to allow the vehicle display device 800 to move in different directions depending on the manipulation of the input apparatus 860.

The manipulation of the input apparatus 860 can be performed to match a manipulation method corresponding to the direction of movement so as to intuitively control the direction of movement of the vehicle display device 800. For example, the manipulation of the input apparatus 860 can be a tilting manipulation in a direction in which the vehicle display device 800 is to be moved.

The input apparatus 860 can communicate with the vehicle display device 800 through a communication module (not shown). A signal generated by the manipulation of the input apparatus 860 can be received by the communication part 810 of the vehicle display device 800 through a communication module (not shown).

Specifically, a signal corresponding to a user manipulation applied through the input apparatus 860 can be converted into a drive signal through the control part 850 and transmitted to the plurality of drive parts 830. Based on different manipulations applied to the input apparatus 860, different drive modules of the plurality of drive parts 830 can be operated.

For example, when a first signal generated according to a first manipulation on the input apparatus 860 is transmitted to the vehicle display device 800, the control part 850 can transmit a first drive signal corresponding to the received first signal to the first drive module 830a to control the display part 820 to move in a first direction.

Here, the first manipulation can include different direction information, for example, one of a direction corresponding to the driver's seat (center) and a direction corresponding to the passenger seat. Additionally, the first direction can be one of a plurality of directions in which the display part 820 moves between the driver's seat (center) and the passenger seat.

Additionally, for example, when a second signal generated according to a second manipulation on the input apparatus 860 is transmitted to the vehicle display device 800, the control part 850 can transmit a second drive signal corresponding to the received second signal to the second drive module 830b to control the display part 820 to move in a second direction.

Here, the second manipulation can include different direction information, for example, one of a direction corresponding to a dashboard of the vehicle and a direction corresponding to a rear seat of the vehicle. Additionally, the second direction can be one of a plurality of directions in which the display part 820 moves to be slid into or out of an internal space of the frame in which the components of the vehicle display device 800 are embedded.

FIG. 3 is a drawing showing the vehicle display device 800 according to an embodiment of the present disclosure installed in the vehicle 100.

As illustrated in FIG. 3, the vehicle display device 800 is formed to include a display part connected to one side of a frame 802 formed to correspond to the driver's seat (or center) and the passenger seat in the vehicle 100, and configured to perform screen control for a rectangular display 825 installed in the frame.

In FIG. 3, the frame 802 is formed to correspond to a cluster, and can be formed to extend from the driver's seat to the passenger seat of the vehicle 100. Additionally, the rectangular display 825 can be installed on the front of the frame 802.

A cabin can be formed inside the frame 802, and a slot 801 can be formed horizontally at a bottom of the frame 802. The vehicle display device 800 can move left and right along the slot 801 according to the drive signal. Additionally, the vehicle display device 800 can be slid into the slot 801 or slid out of the slot 801 according to another drive signal.

At least some components of the vehicle display device 800 can be located in an interior cabin of the frame 802. For example, in the interior cabin of the frame 802, a drive module for moving the vehicle display device 800 in different directions and a portion of the frame including the same can be arranged. The drive module and the frame can move in different directions in the interior cabin of the frame 802 as the vehicle display device 800 moves in different directions.

The vehicle display device 800 can include a center information display (CID). In this specification, the center information display (CID) can be named a display part 820.

The vehicle display device 800 can be located between the driver's seat (or center) and the passenger seat, and can be formed to move between the passenger seat and the driver's seat according to a drive signal. Specifically, the vehicle display device 800 can move left and right along the slot 801 formed on one side of the frame, for example, at the bottom of the frame.

Additionally, the vehicle display device 800 can move to be slid into the slot 801 of the frame 802 or exposed out of the slot 801 from the internal space of the frame 802 based on another drive signal.

The internal space of the frame 802 can contain components of the vehicle display device 800 described above with reference to FIG. 2.

For example, each drive motor constituting the plurality of drive parts 830 that provide driving forces for moving the vehicle display device 800 in different directions, and a fixed/movable frame, and the like, can be located in the internal space of the frame 802.

Additionally, for example, the control part, that is, the processor 850, for controlling the movement and screen of the vehicle display device 800 can be provided in the internal space of the frame 802. Here, the processor 850 can include, for example, a single system on a chip (SoC) including a hypervisor, a CPU (data processing unit), an RT core, an AP core, an NPU, a GPU, and the like, and a micro controller unit (MCU). Additionally, the processor 830 can operate in conjunction with software for one or more AI learning models.

In an embodiment, the processor 850 can not only control the movement and screen of the vehicle display device 800, but also generate a screen control signal for the rectangular display 825 according to the movement and/or manipulation of the vehicle display device 800.

For example, the processor 850 can control a screen displayed on the rectangular display 825 to be different depending on whether the vehicle display device 800 is moved to the driver's seat (or center) and to the passenger seat.

In an initial state, the vehicle display device 800 can be slid into the interior cabin of the frame 802 at a position corresponding to the driver's seat (or center).

In an embodiment, when the vehicle 100 is turned on, the vehicle display device 800 can move in a direction that is gradually exposed outward from the slot 801 of the frame 802. Along with or sequentially with the operation, the screen of the display part 820 of the vehicle display device 800 can be turned on. In this case, it can be said that an ignition-on operation of the vehicle 100 generates the second drive signal.

While the vehicle 100 is driving, the vehicle display device 800 can move along the slot 801 in a transverse direction of the frame 802 based on the received first drive signal. Additionally, the vehicle display device 800 can move in a longitudinal direction (up-down direction) to be slid into the internal space of the slot 801 based on the received second drive signal.

In this case, the first drive signal and the second drive signal can each be generated according to a preset input method, for example, a designated gesture input, a voice command, a touch input to the display part 820, and different manipulations to the input apparatus 860.

In an embodiment, when the vehicle 100 is detected to be turned off or enter parking mode, the vehicle display device 800 can return to a set initial state. For example, when the vehicle display device 800 is exposed to the outside of the slot 801, it can be moved to be slid into the internal space of the slot 801. Additionally, when the vehicle display device 800 is moved to the passenger seat, it can be moved to a position corresponding to the driver's seat (or center). Along with or sequentially with the operation, the screen of the display part 820 of the vehicle display device 800 can be turned off. In this case, it can be said that an ignition-off operation of the vehicle 100 generates a first drive signal and/or the second drive signal according to a current position of the vehicle display device 800.

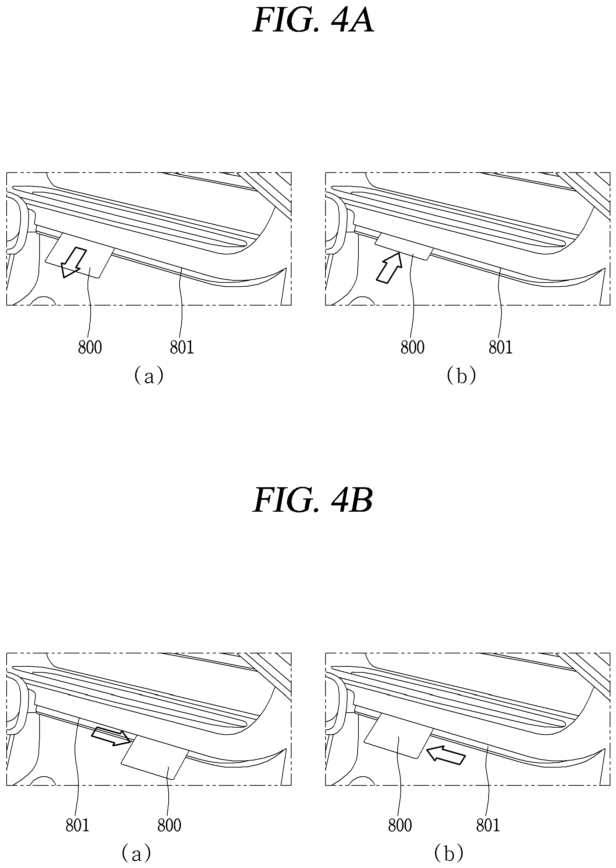

FIGS. 4A and 4B are exemplary drawings for explaining the vehicle display device 800 moving in different directions according to an embodiment of the present disclosure.

Specifically, FIG. 4A is an example of the vehicle display device 800 moving in a direction (hereinafter, referred to as a 'second direction of movement') of being slid into the internal space of the slot 801 of the frame or slid out of the slot 801.

Furthermore, FIG. 4B is an example in which the vehicle display device 800 moves along a transverse direction of the slot 801 between the driver's seat (or center) and the passenger seat (hereinafter, referred to as a 'first direction of movement').

First, describing FIG. 4B, the vehicle display device 800 moves along the slot 801 in a first direction of movement in response to the operation of the first drive module according to the received first drive signal.

Here, the first direction of movement includes the vehicle display device 800 moving from the driver's seat (or center) to the passenger seat, and from the passenger seat to the driver's seat (or center).

For example, in FIG. 4B, the vehicle display device 800 can move from the center (or driver's seat) of the vehicle 100 toward the passenger seat based on a first drive signal (a). Additionally, for example, in FIG. 4B, the vehicle display device 800 can move from the passenger seat of the vehicle 100 toward the center (or driver's seat) based on the first drive signal (b).

Meanwhile, FIG. 4B illustrates embodiments in which the vehicle display device 800 moves in a first direction of movement while exposed to the outside from the slot 801, but the vehicle display device 800 can move in a first direction of movement while being slid into the slot 801.

In this case, the vehicle display device 800 can be moved while being exposed to the outside of the slot 801 so as to allow a portion of the vehicle display device 800 to be recognized from the outside as moving in the first direction of movement. Alternatively, while the vehicle display device 800 is slid into the slot 801 to move in the first direction of movement, an LED (not shown) provided around the slot 801 can be illuminated along the direction of movement. Alternatively, while the vehicle display device 800 is slid into the slot 801 to move in the first direction of movement, an indication of movement can be displayed at a bottom of the rectangular display 825 (FIG. 3).

Subsequently, referring to FIG. 4A, the vehicle display device 800 moves in a second direction of movement in response to operating the second drive module according to the received second drive signal.

Here, the second direction of movement includes a direction of movement in which the vehicle display device 800 is slid into the internal space of the slot 801 and a direction of movement in which it is slid out of the slot 801 and exposed to the outside.

For example, in FIG. 4A, the vehicle display device 800 can move from the center (or driver's seat) of the vehicle 100 to the passenger seat in the internal space of the slot 801 based on the second drive signal (a). Additionally, for example, in FIG. 4B, the vehicle display device 800 can move from the passenger seat of the vehicle 100 toward the center (or driver's seat) based on the first drive signal (b).

In an embodiment, the vehicle display device 800 of FIG. 4A can control the driving of the second drive module to change from one of a slid-in state in which only a first region of the display part 820 (FIG. 2) is exposed to the outside of the slot 801, and a slid-out state in which the exposed area is gradually expanded from the first region to a second region to the other thereof according to the second drive signal.

According to the second drive signal, the vehicle display device 800 can be exposed to the outside of the slot 801 or slid into the slot 801 while a partial region thereof is flexibly bent.

According to the second drive signal, when the vehicle display device 800 is exposed to the outside of the slot 801, a screen of the vehicle display device 800 can be turned on at that time point. Then, when the vehicle display device 800 is slid into the slot 801 according to the second drive signal, the screen of the vehicle display device 800 can be turned off at that time point.

Meanwhile, FIG. 4A illustrates embodiments in which the vehicle display device 800 is exposed to the outside from the slot 801 or slid thereinto at a position corresponding to the driver's seat (or center), but the vehicle display device 800 can also move in a second direction of movement in which it is exposed to the outside from the slot 801 or slid thereinto at a position corresponding to the 'passenger seat'.

In an embodiment, the vehicle display device 800 moves independently in a first direction of movement or moves in a second direction of movement.

For example, the vehicle display device 800 can move sequentially in a first direction of movement and/or a second direction of movement based on time points at which the first drive signal and the second drive signal are received. Additionally, for example, when the vehicle display device 800 receives the first drive signal and the second drive signal simultaneously, it can move in one direction according to a preset reference and then subsequently move in the other direction.

Additionally, for example, when the first drive signal and the second drive signal are received simultaneously, the vehicle display device 800 can move simultaneously in a direction corresponding to each. As an example, when the first and second drive signals are received simultaneously, the vehicle display device 800 can simultaneously perform an operation of being slid into or out of the slot 801 while moving between the driver's seat (or center) and the passenger seat.

In this way, the vehicle display device 800 can move in different directions simultaneously because drive modules for moving in different directions are separately provided.

As shown in FIG. 4B, a driving force of the first drive motor included in the first drive module is provided to the first drive module to move the vehicle display device 800 in the first direction of movement. Additionally, separately therefrom, as shown in F FIG. 4A, a driving force of the second drive motor included in the second drive module is provided to the second drive module to move the vehicle display device 80 in the second direction of movement.

The vehicle display device 800 receives a first drive signal as a control signal that generates a driving force for the first drive motor. Additionally, the vehicle display device 800 receives a second drive signal as a control signal that generates a driving force for the second drive motor.

Here, the first drive signal and the second drive signal can be generated by various methods. For example, a drive signal matching each can be generated based on at least one method among a gesture input, a voice command, a touch input, a button input on a display of the vehicle display device 800, and a manipulation on the manipulation unit 860.

To this end, data for a drive signal that matches each input can be stored in advance in a memory (not shown) of the vehicle display device 800.

In an embodiment, when the drive module corresponding to the generated drive signal operates, a direction of movement of the vehicle display device 800 according to the operation of the drive module can be displayed on a display part of the vehicle display device 800.

For example, while the vehicle display device 800 moves from the driver's seat (or center) toward the passenger seat according to the first drive signal, an indication (e.g., a rightward arrow image) showing the corresponding direction of movement can be displayed on the display part 820 (FIG. 2).

Alternatively, for example, while the vehicle display device 800 is slid out from the inside of the slot 801 of the frame toward the outside according to the second drive signal, an indication (e.g., a downward arrow image) showing the corresponding direction of movement can be displayed at a bottom of the rectangular display (825, FIG. 3) mounted on the frame.

In this way, the vehicle display device 800 according to an embodiment of the present disclosure operates such that a plurality of drive parts, that is, the first drive module 830a and the second drive module 830b operate in different directions, respectively, so as to allow the display part 820 to move in different directions.

To this end, as described above, the first drive module 830a and the second drive module 830b can be respectively arranged in different directions, for example, orthogonal directions, within a housing having a slot.

As described with reference to FIGS. 2 and 3, a plurality of drive parts 830 include a first drive module 830a and a second drive module 830b. The first drive module 830a operates to move the display part 820 of the vehicle display device 800 in a first direction. The second drive module 830b operates to move the display part 820 of the vehicle display device 800 in a second direction different from the first direction so as to be slid out of or into the slot 802 therethrough to increase or decrease its external exposure area.

Hereinafter, a structure and detailed configuration of each of the first drive module 830a and the second drive module 830b for such an operation of the plurality of drive parts 830 will be described in detail.

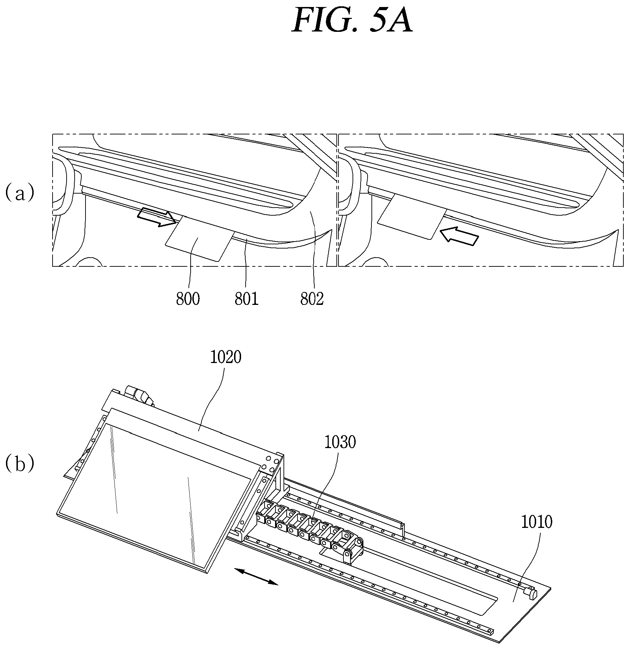

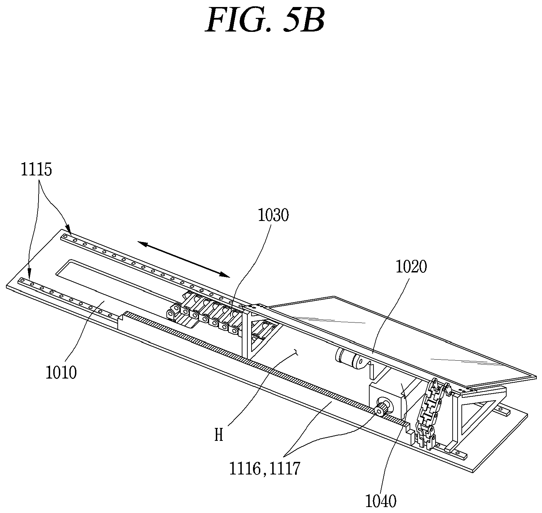

Hereinafter, FIGS. 5A and 5B illustrate a structure and detailed configuration of the first drive module 830a for moving the vehicle display device 800 in a first direction.

The first drive module 830a is arranged in an internal space of the housing, that is, the frame 802 having the slot 801. The first drive module 830a performs an operation in the same direction as the first direction in the internal space of the frame 802 to move the display part 820 of the vehicle display device 800 in the first direction.

Referring to (a) of FIG. 5A, the first direction can be a direction in which the vehicle display device 800 moves along a bar-shaped slot 801 formed at a bottom of the frame 802. Additionally, the movement in the first direction can refer to moving, by the vehicle display device 800, in a horizontal direction (transverse direction) with respect to the frame 802. Additionally, the movement in the first direction can refer to moving, by the vehicle display device 800, from a position corresponding to the driver's seat or center to the passenger seat, or moving from the passenger seat to the driver's seat or center.

Referring to (b) of FIG. 5A, the first drive module 830a includes a first fixed frame 1010 located on a rear surface of the display part 820 and a first movable frame 1020 formed to be movable on the first fixed frame 1010. The first fixed frame 1010 and the first movable frame 1020 can be made of metal.

The first fixed frame 1010 can have a bar-shaped structure extending in a horizontal direction. A horizontal length of the first fixed frame 1010 corresponds to a distance by which the display part 820 can move in a first direction, for example, a horizontal direction. The horizontal length of the first fixed frame 1010 can correspond to a length of the slot 801 formed in the frame 802. For example, the horizontal length of the first fixed frame 1010 can be 400 mm to 450 mm.

The display part 820 of the vehicle display device 800 can be mounted on a front surface of the first movable frame 1020. Accordingly, when the first movable frame 1020 moves, the display part 820 is implemented to move together with the first movable frame 1020. Specifically, the first movable frame 1020 is arranged on the first fixed frame 1010 to move in the first direction along the guide part 1115 (FIG. 5B) of the first fixed frame 1010.

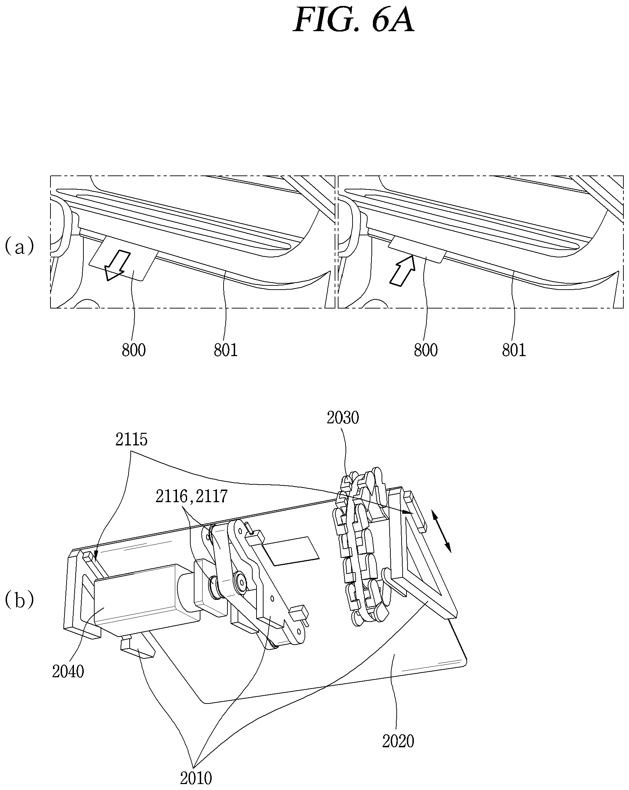

In an embodiment, the first movable frame 1020 can refer to a flat lower frame arranged above the guide part 1115 (FIG. 5B) of the fixed frame 1010. In this case, a structure formed on the lower frame can be said to be the second fixed frame 2010 shown in FIG. 6A.

The first movable frame 1020 can be implemented to include a triangular fixed support frame as shown in (b) of FIG. 5A. Accordingly, a first support frame adjacent to the first fixed frame 1010 located below the first movable frame 1020 is parallel to the first fixed frame 1010, and a second support frame spaced apart from the first fixed frame 1010 is implemented to form an acute angle with the first fixed frame 1010. Accordingly, the display part 820 mounted on the first movable frame 1020 is implemented to form a predetermined inclination with respect to the first fixed frame 1010.

A first cableveyor 1030 can be located between the first movable frame 1020 and the first fixed frame 1010. The first cableveyor 1030 can be formed as a rail structure including a plurality of unit chains connected to be mutually rotatable, as shown in FIGS. 5A and 5B.

One side of the first cableveyor 1030 can be fixed to a portion of the first fixed frame 1010, for example, to a side surface of a hole elongated in a length direction in the center. Additionally, the other side of the first cableveyor 1030 can be connected to one side of a lower support frame of the first movable frame 1020.

When the first movable frame 1020 moves, at least some of the plurality of chains included in the first cableveyor 1030 move toward a hole formed in the first fixed frame 1010 or move in a direction away from the hole.

When the first movable frame 1020 moves in a direction approaching the hole formed in the first fixed frame 1010, the plurality of chains included in the first cableveyor 1030 gradually fill the hole while moving toward the hole.

Additionally, when the first movable frame 1020 moves away from the hole formed in the first fixed frame 1010, the plurality of chains included in the first cableveyor 1030 gradually move away from the hole while moving in a direction away from the hole.

The plurality of unit chains included in the first cableveyor 1030 can also be named as transfer rollers for transferring the first movable frame 1020. The driving of the plurality of unit chains moves the first movable frame 1020 in a first direction according to the driving of the first motor 1040 (FIG. 5B) connected to the first cableveyor 1030.

The first cableveyor 1030 is fixed to the first fixed frame 1010. That is, the first fixed frame 1010 can function as a support for the first cableveyor 1030.

Specifically, the first cableveyor 1030 can include a first cableveyor connection module (not shown) for connecting to one side of the first fixed frame 1010. Accordingly, while the first movable frame 1020 moves left and right, one side of the first cableveyor 1030 can be firmly fixed to the first fixed frame 1010.

Additionally, the first cableveyor 1030 moves left and right in conjunction with the first movable frame 1020. To this end, the first cableveyor 1030 can include a second cableveyor connection module (not shown) connected to a lower support frame of the first movable frame 1020, for example, a first support frame. Alternatively, a structure can be formed such that the lower support frame of the first movable frame 1020 is mounted on at least a portion of the first cableveyor 1030.

In an embodiment, one side of the first fixed frame 1010 at which the first cableveyor connection module (not shown) is located (or one side of the hole formed in the first fixed frame 1010) can serve as a first stopper when one end of the first movable frame 1020 reaches a first threshold point in a first direction. Similarly, one side of a lower support frame of the first movable frame 1020 at which the second cableveyor connection module (not shown) is located can serve as a second stopper when the other end of the first movable frame 1020 reaches a second threshold point in the first direction.

Here, a separation distance between the first threshold point and the second threshold point corresponds to a maximum distance of movement by which the first movable frame 1020 can move in the first direction. Here, a movement in the first direction includes a movement of the first movable frame 1020 in both a left horizontal direction and a right horizontal direction with respect to the first fixed frame 1010, as described above.

For example, when the first movable frame 1020 moves in the first direction and one end thereof reaches the first threshold point, the first movable frame 1020 is fixed without moving further in the left (right) horizontal direction. Additionally, for example, when the first movable frame 1020 moves in the first direction and the other end thereof reaches the second threshold point, it is fixed without moving further in the right (left) horizontal direction.

Subsequently, referring to FIG. 5B, the first drive module 803a further includes a first motor 1040 that provides a driving force to move the first movable frame 1020 left and right.

The first motor 1040 can be arranged on a rear surface of the first movable frame 1020 as shown. More specifically, the first motor 1040 can be located within a space H formed by a rear surface of the first movable frame 1020 and the lower support frame.

The first motor 1040 is arranged such that its rotating drive shaft faces the display part 820 mounted on the first movable frame 1020.

The first motor 1040 can operate in conjunction with a rack and pinion gear module 1116, 1117 formed on one side of the first fixed frame 1010. Specifically, the rack and pinion gear module 1116, 1117 can be formed in a fastening structure in which the pinion 1117 formed to protrude from the drive shaft of the first motor 1040 is driven by engaging with the rack 1116 formed on one side of the first fixed frame 1010.

The rack 1116 formed on one side of the first fixed frame 1010 can be formed at a predetermined height on a stepped structure, for example, on a rectangular side surface of the first fixed frame 1010 far from the display part 820 to engage with the pinion 1117 of the drive shaft of the first motor 1040.

The rack 1116 can be formed with a structure having a plurality of teeth that are coupled to the pinion 1117 coupled to the drive shaft of the first motor 1040 along one surface in a length direction.

As for the driving of the shown rack and pinion gear module 1116, 1117, a rotation shaft of the first motor 1040 rotates while the pinion 117 coupled to the rotation shaft rotates according to the driving of the first motor 1040. Accordingly, the first movable frame 1020 on which the first motor 1040 is arranged moves in a first direction while engaging sequentially with a plurality of teeth formed on the rack 1116.

Specifically, when a first drive signal is received from the control part 850 (or processor) to the first drive module 830a, the rotation shaft of the first motor 1040 rotates in a direction corresponding to detailed direction information (e.g., left/right direction included in the first direction) included in the first drive signal. For example, the rotation shaft of the first motor 1040 rotates clockwise or counterclockwise based on detailed direction information included in the first drive signal. When the rotation shaft of the first motor 1040 rotates counterclockwise, while the rack and pinion gear module 1116, 1117 is driven, the first movable frame 1020 moves in a direction closer to a rectangular hole formed in the first fixed frame 1010, that is, in a right direction with respect to the display part 820. On the other hand, when the rotation shaft of the first motor 1040 rotates clockwise, while the rack and pinion gear module 1116, 1117 is driven, the first movable frame 1020 moves in a direction away from the rectangular hole formed in the first fixed frame 1010, that is, in a left direction with respect to the display part 820.

In this way, when a driving force is applied to the rack and pinion gear module 1116, 1117 in conjunction with the driving of the first motor 1040, the first movable frame 1020 operates to move in a first direction, for example, in a horizontal direction (transverse direction), along the guide part 1115 of the first fixed frame 1010.

Meanwhile, the control part 850 (or processor) of the vehicle display device 800 can control electrical power applied to the first motor 1040 to control at least one of a distance and speed of movement of the first movable frame 1020.

Specifically, the control part 850 can apply electrical power to the first motor 1040 for a first time period to rotate the rotation shaft of the first motor 1040 for the first time period, thereby controlling the first movable frame 1020 to move left and right by a first distance of movement corresponding to the first time period. Additionally, the control part 850 can apply electrical power to the first motor 1040 for a second time period different from the first time period to rotate the rotation shaft of the first motor 1040 for the second time period, thereby controlling the first movable frame 1020 to move left and right by a second distance of movement corresponding to the second time period, Here, the second time period refers to a time period that is longer or shorter than the first time period.

Additionally, specifically, the control part 850 can apply electrical power having a first magnitude to the first motor 1040 so as to allow a rotational speed of the rotation shaft of the first motor 1040 to rotate at a first speed, thereby controlling the first movable frame 1020 to move in a first direction at a speed of movement corresponding to the first speed. Additionally, the control part 850 can apply electrical power having a second magnitude different from the first magnitude to the first motor 1040 so as to allow a rotational speed of the rotation shaft of the first motor 1040 to rotate at a second speed, thereby controlling the first movable frame 1020 to move in a first direction at a speed of movement corresponding to the second speed. Here, electrical power having the second magnitude refers to electrical power larger or shorter than that having the first magnitude.

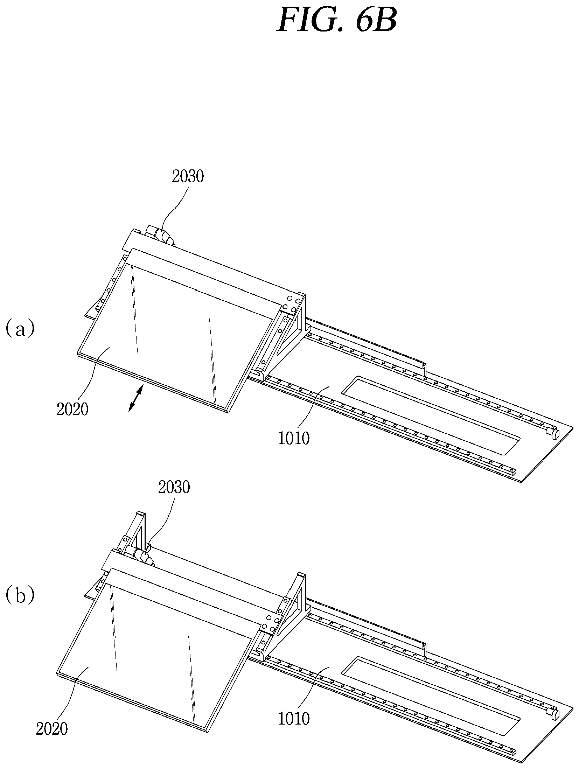

FIGS. 6A and 6B show a structure and detailed configuration of the second drive module 830b for moving the vehicle display device 800 in a second direction different from the aforementioned first direction.

The second drive module 830b can be arranged in an internal space of the housing, that is, the frame 802 having the slot 801. The second drive module 830b performs an operation in the same direction as the second direction in the internal space of the frame 802 to move the display part 820 of the vehicle display device 800 in the second direction.

Referring to (a) of FIG. 6A, the second direction can be a direction in which the vehicle display device 800 is slid into or out of the internal space of the frame 802 through a bar-shaped slot 801 formed at a bottom of the frame 802. Additionally, the movement in the second direction can refer to moving, by the vehicle display device 800, in a vertical direction (longitudinal direction) with respect to the frame 802. Additionally, the movement in the second direction can refer to moving, by the vehicle display device 800, so as to be exposed toward the driver's seat and passenger seat of the vehicle from a space formed inside the frame 802, or moving into a space formed inside the frame 802 so as to be hidden from the driver's seat and passenger seat of the vehicle.

Referring to (b) of FIG. 6A, the second drive module 830b includes a second movable frame 2020 on which the display part 820 is mounted, and a second fixed frame 2010 located below the second movable frame 2020 to support the second movable frame 2020 on which the display part 820 is mounted. The second fixed frame 2010 and the second movable frame 2020 can be formed of a metal material.

As shown, the second fixed frame 2010 can be formed to include a plurality of partial fixed frames for supporting the second movable frame 2020. The plurality of partial fixed frames can be spaced apart at predetermined intervals so as to form a plurality of columns on a rear surface of the second movable frame 2020, for example.

The second movable frame 2020 is formed to be movable in a second direction, that is, an up-down direction, with respect to the fixed second fixed frame 2010. Accordingly, the display part 820 mounted on the second movable frame 2020 moves in an up-down direction together with the second movable frame 2020.

Referring to (b) of FIG. 6A, the second fixed frame 2010 is formed in a structure that supports the second movable frame 2020 so as to allow the second movable frame 2020 to move in an up-down direction along guide parts 2115 provided on both sides of the second fixed frame 2010. Each of the plurality of partial fixed frames included in the second fixed frame 2010 is formed in a triangular shape such that the second movable frame 2020 supported by the second fixed frame 2010 can be formed to have a predetermined inclination. In this case, during the movement of the second movable frame 2020 in the second direction, when the display part 820 mounted on the second movable frame 2020 is exposed to the outside of the frame 802 through the slot 801 of the frame 802, the occupant can view a screen of the display part 820 at a comfortable viewing angle.

Each of the plurality of fixed frames included in the second fixed frame 2010 can be configured to form a rail structure for the second movable frame 2020 to move in the second direction. A vertical length of each fixed frame of the second fixed frame 2010 corresponds to a distance by which the display part 820 can move in a second direction, for example, an up-down direction (vertical direction). The vertical length of each fixed frame of the second fixed frame 2010 can correspond to a rail length formed in at least some of the fixed frames. For example, the vertical length of the second fixed frame 2010 can be between 90 mm and 100 mm.

A lower frame of each fixed frame of the second fixed frame 2010 can be the first movable frame 1020 formed above the guide part 1115 of the first fixed frame 1010 as shown in FIG. 5B. In the embodiment, the second fixed frame 2010 can be used with the same meaning as the first movable frame 1020 or can refer to a structure coupled to the lower frame of the first movable frame 1020. Alternatively, it can be said that the aforementioned first movable frame 1020 includes the second fixed frame 2010, the second movable frame 2020, and the lower frame.

Referring to FIG. 6B, the display part 820 of the vehicle display device 800 is mounted on a front surface of the second movable frame 2020, and thus when the second movable frame 2020 moves in a second direction, the display part 820 is implemented to move together. Specifically, the second movable frame 2020 is arranged on the second fixed frame 2010 to move in the second direction, that is, an up-down direction, along the guide part 2115 (FIG. 6A) of the second fixed frame 2010.

Meanwhile, since the first drive module 830a and the second drive module 830b can be driven independently, the first drive frame 1020 can also move in the first direction while the second movable frame 2020 moves in the second direction.

In this case, while the second fixed frame 2010 supports the second movable frame 2020 and the second movable frame 2020 moves the display part 820 in an up-down direction, the first movable frame 1020 can move the display part 820 in a left-right direction along the guide part 1115 of the first fixed frame 1010.

The second movable frame 2020 can be divided into a first frame having the same or similar area as the display part 820 and on which the display part 820 is mounted, and a second frame including a coupling element that moves in engagement with a rail of the guide part 2115 of the second fixed frame 2010. Here, the second frame can be located above the first frame, and the coupling element that engages with the rails of the guide parts 2115 can be formed on both sides of the second frame.

The second movable frame 2020 can be formed to slide down or up along a triangular fixed support frame on a rear surface thereof, that is, the guide part 2115 of the second fixed frame 2010, as shown in (a) and (b) of FIG. 6B. Specifically, referring further to FIG. 6A, when the second movable frame 2020 moves downward along the guide part 2115, the rail of the guide part 2115 of the second fixed frame 2010 is gradually exposed. On the other hand, when the second movable frame 2020 moves upward along the guide part 2115, the rail of the guide part 2115 of the second fixed frame 2010 is gradually hidden by the second movable frame 2020.

Referring again to FIG. 6A, a second cableveyor 2030 can be located between the second movable frame 2020 and the second fixed frame 2010. The second cableveyor 2030 can be formed as a rail structure including a plurality of unit chains connected to be mutually rotatable as shown.

One side of the second cableveyor 2030 can be fixed to one lower frame of the plurality of fixed frames of the second fixed frame 2010. Additionally, the other side of the second cableveyor 2030 can be connected to an upper frame of the second movable frame 2020, that is, to one side of the first frame of the aforementioned second movable frame 2020.

When the second movable frame 2020 moves, at least some of the plurality of chains included in the second cableveyor 2030 are gradually exposed to a front surface thereof or moved to a rear surface thereof and hidden as the second movable frame 2020 moves in the second direction.

The plurality of unit chains included in the second cableveyor 2030 can also be named as transfer rollers for transferring the second movable frame 2020. The driving of the plurality of unit chains moves the second movable frame 2020 in the second direction according to the driving of the second motor 2040 (FIG. 6A) in conjunction with the second cableveyor 2030.

The second cableveyor 2030 is fixed to the second fixed frame 2010. To this end, the second cableveyor 2030 can include a third cableveyor connection module (not shown) for connecting to one side of the second fixed frame 2010. Accordingly, while the second movable frame 2020 moves up and down, one side of the second cableveyor 2030 can be firmly fixed to the lower frame of the second fixed frame 2010 (or the first movable frame 1020).

The second cableveyor 2030 moves up and down in conjunction with the second movable frame 2020. In an embodiment, one side of a lower frame of the second fixed frame 2010 at which the third cableveyor connection module (not shown) is located can serve as a first stopper when one end of the second movable frame 2020 reaches a first threshold point in a second direction. Similarly, an upper end of the second movable frame 2020 at which the fourth cableveyor connection module (not shown) is located, that is, one side of the aforementioned second frame, can serve as a second stopper when the other end of the second movable frame 2020 reaches a second threshold point in the second direction.

Here, a separation distance between the first threshold point and the second threshold point corresponds to a maximum distance of movement by which the second movable frame 2020 can move in the second direction. Here, a movement in the second direction includes a movement of the second movable frame 2020 in both an upward vertical direction and a downward vertical direction with respect to the second fixed frame 2010, as described above.

For example, when the second movable frame 2020 moves in the second direction and one end thereof reaches the first threshold point, the second movable frame 2020 is fixed without moving further in the downward (upward) vertical direction. Additionally, for example, when the second movable frame 2020 moves in the second direction and the other end thereof reaches the second threshold point, it is fixed without moving further in the upward (downward) vertical direction.

Subsequently, referring to FIG. 6A, the second drive module 803b further includes a second motor 2040 that provides a driving force to move the second movable frame 2020 up and down.

The second motor 2040 can be arranged on a rear surface of the second movable frame 2020 as shown. More specifically, the second motor 2040 can be located in a space formed between a rear surface of the second movable frame 2020 and the second fixed frame 2010.

Specifically, the second motor 2040 can be located between a plurality of support frames of the second fixed frame 2010, and a rotating drive shaft of the second motor 2040 is arranged in a direction orthogonal to the second direction of the display part 820 mounted on the second movable frame 2020.

The second motor 2040 can operate in conjunction with a timing pulley and belt gear module 2116, 2117 formed on one side of the second fixed frame 2010, for example, between a plurality of fixed frames. Specifically, the timing pulley and belt gear module 2116, 2117 can be formed in a structure in which the pulley 2116 formed to protrude from the drive shaft of the second motor 2040 is driven by engaging with the belt gear module 2117 formed on one side of the second fixed frame 2010.

In this case, although not shown in detail, the belt gear module 2117 can also have a tooth-shaped tooth corresponding to that formed in the pulley 2116. Accordingly, a driving force according to the rotation of the second motor 2040 can be transmitted to the second movable frame 2020 through the pulley and belt gear module 2116, 2117 without slipping.

The belt gear module 2117 located on one side of the second fixed frame 2010, for example, at the center between a plurality of fixed frames, is coupled to the pulley 2116 formed on the drive shaft of the second motor 2040 so as to allow the teeth formed on the pulley 2116 and the teeth formed on the belt gear module 1117 to rotate while engaging with each other. Accordingly, a driving force for moving the second movable frame 2020 in a second direction can be transmitted.

Specifically, when a first drive signal is received from the control part 850 (or processor) to the second drive module 830b, the drive shaft (rotation shaft) of the second motor 2040 rotates in a direction corresponding to detailed direction information (e.g., upward/downward direction included in the second direction) included in the second drive signal.

For example, the rotation shaft of the first motor 2040 rotates clockwise or counterclockwise based on detailed direction information included in the second drive signal. When the rotation shaft of the second motor 2040 rotates clockwise, the pulley and belt gear module 2116, 2117 is driven clockwise, and the second movable frame 2020 that receives a driving force moves the display part 820 downward. Accordingly, as in (a) of FIG. 4A, the vehicle display device 800 is slit out of the internal space to the outside through the slot 801 of the frame 802. On the other hand, when the rotation shaft of the second motor 2040 rotates counterclockwise, the pulley and belt gear module 2116, 2117 also drives counterclockwise, and the second movable frame 2020 that receives the driving force moves the display part 820 upward. Accordingly, as shown in (b) of FIG. 4A, the vehicle display device 800 is gradually slid into the internal space through the slot 801 of the frame 802.

In this way, when a driving force is applied to the pulley and belt gear module 2116, 2117 in conjunction with the driving of the second motor 2040, the second movable frame 2020 operates to move in a second direction, for example, in an up-down direction (longitudinal direction), along the guide part 2115 provided on each of the plurality of fixed frames of the second fixed frame 2010.

Meanwhile, the control part 850 (or processor) of the vehicle display device 800 can control electrical power applied to the second motor 2040 to control at least one of a distance and speed of movement of the second movable frame 2020.

Specifically, the control part 850 can apply electrical power to the second motor 2040 for a first time period to rotate the rotation shaft of the second motor 2040 for the first time period, thereby controlling the second movable frame 2020 to move up and down by a first distance of movement corresponding to the first time period. Additionally, the control part 850 can apply electrical power to the second motor 2040 for a second time period different from the first time period to rotate the rotation shaft of the second motor 2040 for the second time period, thereby controlling the second movable frame 2020 to move up and down by a second distance of movement corresponding to the second time period, Here, the second time period refers to a time period that is longer or shorter than the first time period.

Additionally, specifically, the control part 850 can apply electrical power having a first magnitude to the second motor 2040 so as to allow a rotational speed of the rotation shaft of the second motor 2040 to rotate at a first speed, thereby controlling the second movable frame 2020 to move in a second direction at a speed of movement corresponding to the first speed. Additionally, the control part 850 can apply electrical power having a second magnitude different from the first magnitude to the second motor 2040 so as to allow a rotational speed of the rotation shaft of the second motor 2040 to rotate at a second speed, thereby controlling the second movable frame 2020 to move in a second direction at a speed of movement corresponding to the second speed. Here, electrical power having the second magnitude refers to electrical power larger or shorter than that having the first magnitude.

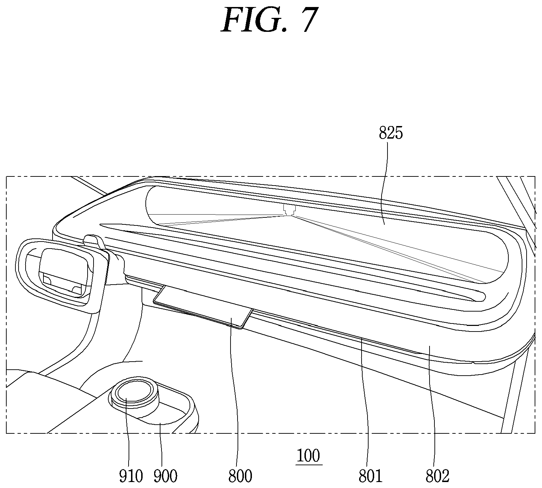

Hereinafter, FIG. 7 is a drawing for explaining a console for controlling the movement of the vehicle display device 800.

As used herein, the console refers to a manipulation part or input apparatus for manipulating the operation of the vehicle display device 800.

In one embodiment, the console 900 as shown in FIG. 7 can be understood as the same apparatus as the input apparatus 860 of FIG. 2. In this case, the console 900 can be understood to be integral with the vehicle display device 800.

Additionally, in another embodiment, the console 900 can be understood as a separate input apparatus distinct from the vehicle display device 800. In this case, the console 900 can be wired/wireless connected so as to allow the vehicle display device 800 to communicate in an on state.

The console 900 can be located between the driver's seat and the passenger seat of the vehicle 100, as shown in FIG. 7. Accordingly, both a driver in the driver's seat and an occupant in the passenger seat can easily manipulate the console 900 without changing their posture.

The console 900 can include a manipulation unit 910 formed to be movable and/or tiltable in the frame. Additionally, although not shown, the console 900 can include a sensor for detecting a movement and/or tilting of the manipulation unit 910. Additionally, the console 900 can include a processor (not shown) and a communication module (not shown) for generating a signal corresponding to a detected sensing value and transmitting it to the vehicle display device 800.

Depending on a direction of movement of the manipulation unit 910, different signals can be transmitted from the console 900 to the vehicle display device 800.

For example, as the manipulation unit 910 moves in a direction from the driver's seat (or center) toward the passenger seat, a first drive signal for moving the vehicle display device 800 from the driver's seat (or center) toward the passenger seat can be generated. Then, the vehicle display device 800 moves toward the passenger seat along a transverse direction of the slot 801 of the frame 802 based on the first drive signal.

Additionally, for example, as the manipulation unit 910 moves from the passenger seat to the driver's seat (or center), a first drive signal for moving the vehicle display device 800 from the passenger seat to the driver's seat (or center) can be generated. Then, the vehicle display device 800 moves toward the driver's seat (or center) along the transverse direction of the slot 801 of the frame 802 based on the first drive signal.

Depending on a tilting direction of the manipulation unit 910, different signals can be transmitted from the console 900 to the vehicle display device 800.

For example, as the manipulation unit 910 is tilted downward (or toward the rear seat of the vehicle 100), a second drive signal for allowing the vehicle display device 800 to be slid out through the slot 801 from the internal space of the frame 802 can be generated. Then, the vehicle display device 800 is gradually slid out through the slot 801 of the frame 802 based on the second drive signal.

Additionally, for example, as the manipulation unit 910 is tilted upward (or toward a front seat HUD of the vehicle 100), a second drive signal for moving the vehicle display device 800 to be slid into the internal space of the frame 802 can be generated. Then, the vehicle display device 800 is gradually slid into the internal space of the frame 802 through the slot 801 of the frame 802 based on the second drive signal.

The vehicle display device 800 can receive a signal according to a manipulation of the console 900 from the console 900 through the communication part 810.

Specifically, the vehicle display device 800 generates a first drive signal based on a first signal according to a first manipulation of the console 900, and controls the operation of the first drive module 830a based on the generated first drive signal, thereby allowing the vehicle display device 800 to move in a first direction.

Here, the first signal according to the first manipulation of the console 900 is a signal that triggers the vehicle display device 800 to move in a transverse direction along the slot 801 with respect to the frame 802. Additionally, the generated first drive signal triggers the operation of the first drive module 830a so as to allow the vehicle display device 800 to move in a transverse direction along the slot 801. Accordingly, the vehicle display device 800 performs a movement operation in a first direction, moving between the driver's seat (or center) and the passenger seat.

The vehicle display device 800 generates a second drive signal based on a second signal according to a second manipulation of the console 900, and controls the operation of the second drive module 830b based on the generated second drive signal, thereby allowing the vehicle display device 800 to move in a second direction of movement.

Here, the second signal according to the second manipulation of the console 900 is a signal that triggers the vehicle display device 800 to be slide out of the slot 801 with respect to the frame 802 or to be slid into the internal space along the slot 801 (i.e., to move in a longitudinal direction). Additionally, the generated second drive signal triggers the operation of the second drive module 830b so as to allow the vehicle display device 800 to be slid into or out of the internal space of the slot 801. Accordingly, the vehicle display device 800 performs a movement operation in a second direction that moves to be slid out of the slot 802 or slid into the internal space of the slot 802.

In an embodiment, the vehicle display device 800 can include a second display 825 mounted thereon in a rectangular shape in the frame 820. In this case, at least a portion of the screen displayed on the second display 825 can perform screen control based on the movement of the vehicle display device 800.

For example, based on the vehicle display device 800 moving in a first direction, at least a portion of the screen of the second display 825 can be controlled to be switched from a screen related to vehicle driving to a screen for the passenger seat, or vice versa.

Additionally, for example, based on the vehicle display device 800 moving in a second direction, at least a portion of the screen of the second display 825 can be controlled to be switched to a screen corresponding to an active or inactive state of the vehicle display device 800.

Meanwhile, as described above, the first drive signal and the second drive signal for moving the vehicle display device 800 in different directions can be generated through various input methods. Hereinafter, a structure of the manipulation unit 910 of the console 900 in relation to controlling the movement of the vehicle display device 800 by generating a first drive signal and a second drive signal based on an operation of the console will be described in detail.

The vehicle display device 800 can be spaced apart from the display part 820 to further include the manipulation unit 910 that generates a signal matching an operation of a plurality of drive modules 830a, 830b according to a manipulation applied thereto. The manipulation unit 910 can be spaced apart from other components of the vehicle display device 800.

In an embodiment, the manipulation unit 910 includes a first direction manipulation module that generates a signal matching the operation of the first drive module 830a of the vehicle display device 800, and a second direction manipulation module that generates a signal matching the operation of the second drive module 830b of the vehicle display device 800. The control part 850 of the vehicle display device 800 transmits a signal generated by the manipulation unit 910 to each matching drive module 830a or 830b to control a drive module corresponding thereto to operate.

Hereinafter, a structure of the first direction manipulation module and the second direction manipulation module of the manipulation unit 910 will be described in detail. As described above, the console 900 can include a communication module for transmitting a signal corresponding to a movement/tilting of the manipulation unit 910 to the vehicle display device 800. Thus, based on a signal according to an operation of the first direction manipulation module and/or the second direction manipulation module of the manipulation unit 910, the vehicle display device 800 can move in a first direction and/or a second direction.

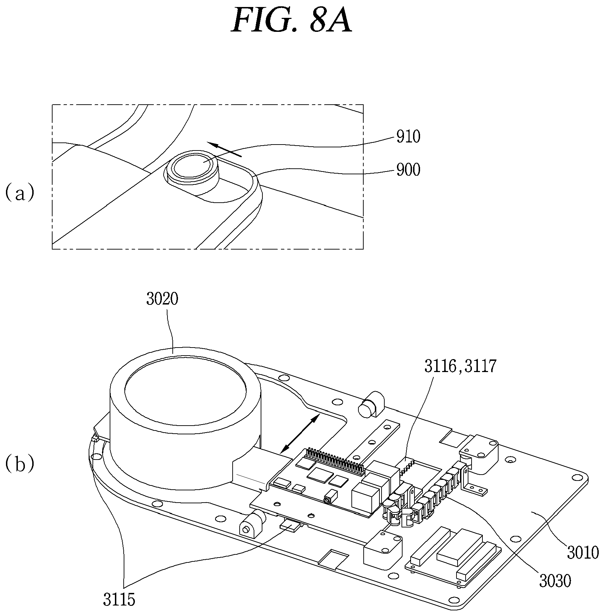

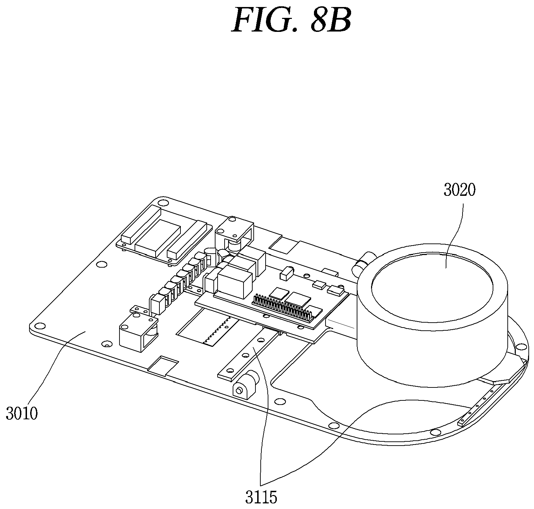

FIGS. 8A and 8B illustrate a structure and detailed configuration of a first direction manipulation module for moving the manipulation unit 910 of the console 900 left and right.

Referring to FIG. 8A, the first direction manipulation module included in the manipulation unit 910 can include a third fixed frame 3010 and a third movable frame 3020 located above the third fixed frame 3010 as a configuration for generating a signal corresponding to the aforementioned first direction.

A hole is formed on one side of the third fixed frame 3010, and the third movable frame 3020 is configured to be located above the hole. In this case, the hole can have an oval shape elongated in a transverse direction.

The third movable frame 3020 can include a bar-shaped first connection module that can move between the left and right of the hole of the third fixed frame 3010, a square-shaped second connection module that overlaps with the third fixed frame 3010, and a manipulation module for a user hand operation.

In this case, one side and the other side of the first connection module are respectively connected to one side of the guide part 3115 of the third fixed frame 3010 and one side of the second connection module. Additionally, one side and the other side of the second connection module are connected to the other side of the guide part 3115 of the third fixed frame 3010 and the first connection module. The first connection module and the second connection module form a 'T' shape through coupling, and a circular manipulation module of the third movable frame 3020 is arranged above the first connection module. In this case, the circular manipulation module can be configured with a shape that protrudes upward so as to allow the driver/occupant to feel a feeling of manipulation when manipulating it.

The third movable frame 3020 can move horizontally along the guide part 3115 formed on the third fixed frame 3010 with respect to the driver's seat and passenger seat of the vehicle. Accordingly, a signal for moving the vehicle display device 800 in the first direction is generated.

Specifically, as the third movable frame 3020 moves along the guide part 3115 from a position corresponding to the driver's seat to a position corresponding to the passenger seat, or moves from the left to the right with respect to the frame of the console 900, a first signal can be generated to move the vehicle display device 800 from the driver's seat (or center) to the passenger seat and transmitted to the vehicle display device 800.

Additionally, as the third movable frame 3020 moves along the guide part 3115 from a position corresponding to the passenger seat to a position corresponding to the driver's seat, or moves from the right to the left with respect to the frame of the console 900, a second signal can be generated to move the vehicle display device 800 from the passenger seat to the driver's seat (or center) and transmitted to the vehicle display device 800.

In an embodiment, the first direction manipulation module included in the manipulation unit 910 can include a third cableveyor 3030 that moves horizontally in conjunction with the third movable frame 3020.

One side of the third cableveyor 3030 can be coupled to one side of the third fixed frame 3010, and the other side of the third cableveyor 3030 can be coupled to one side of the third movable frame 3020, for example, to the other side of the aforementioned second connection module. The third cableveyor 3030 can have a rail structure including a plurality of unit chains connected to be mutually rotatable as shown.

When the third movable frame 3020 moves from the left to the right with respect to the frame of the console 900 by an external force, the unit chains on one side of the third cableveyor 3030 move in a right direction in the same manner as the third movable frame 3020, and the other side of the third cableveyor 3030 maintains a state of being firmly fixed to one side of the third fixed frame 3010.

Additionally, when the third movable frame 3020 moves from the right to the left with respect to the frame of the console 900 by an external force, the unit chains on one side of the third cableveyor 3030 move in a left direction in the same manner as the third movable frame 3020, and the other side of the third cableveyor 3030 maintains a state of being firmly fixed to one side of the third fixed frame 3010.

In an embodiment, the first direction manipulation module included in the manipulation unit 910 can further include a rack and pinion gear module 3116, 3117 that engages with each other based on an external force applied to the third movable frame 3020 and operates to allow the third movable frame 3020 to move horizontally along the guide part 3115 of the third fixed frame 3010.

The driving of the shown rack and pinion gear module 3116, 3117 helps the third movable frame 3020 move smoothly while a pinion located below the third movable frame 3020 sequentially engages with a teeth of a rack formed in the hole (hereinafter referred to as a 'second hole') on one side of the third fixed frame 3010 based on an external force applied to the third movable frame 3020.

In an embodiment, the control part 850 of the vehicle display device 800 controls the first movable frame 1020 (FIG. 5A) of the first drive module 830a to move in the aforementioned first direction along the guide part 1115 (FIG. 5B) of the first fixed frame 1010 (FIG. 5A) based on a first signal generated according to a horizontal movement of the third movable frame 3020.

Referring to FIGS. 8A and 8B, for example, when the third movable frame 3020 moves from the left to the right with respect to the frame of the console 900 based on an external force applied to the third movable frame 3020, a first signal is generated while the third cableveyor 3030 and the rack and pinion gear module 3116, 3117 are driven in a matching direction. The control part 850 generates and transmits a first drive signal that moves the first drive module 830a according to the generated first signal, and accordingly, controls the first movable frame 1020 to move along the guide part 1115 of the first fixed frame 1010 so as to allow the display part 820 to move from the left (driver's seat or center) to the right (passenger seat).

Additionally, for example, when the third movable frame 3020 moves from the right to the left with respect to the frame of the console 900 based on an external force applied to the third movable frame 3020, a second signal is generated while the third cableveyor 3030 and the rack and pinion gear module 3116, 3117 are driven in a matching direction. The control part 850 generates and transmits a first drive signal that moves the first drive module 830a according to the generated second signal, and accordingly, controls the first movable frame 1020 to move along the guide part 1115 of the first fixed frame 1010 so as to allow the display part 820 to move from the right (passenger seat) to the left (driver seat or center).

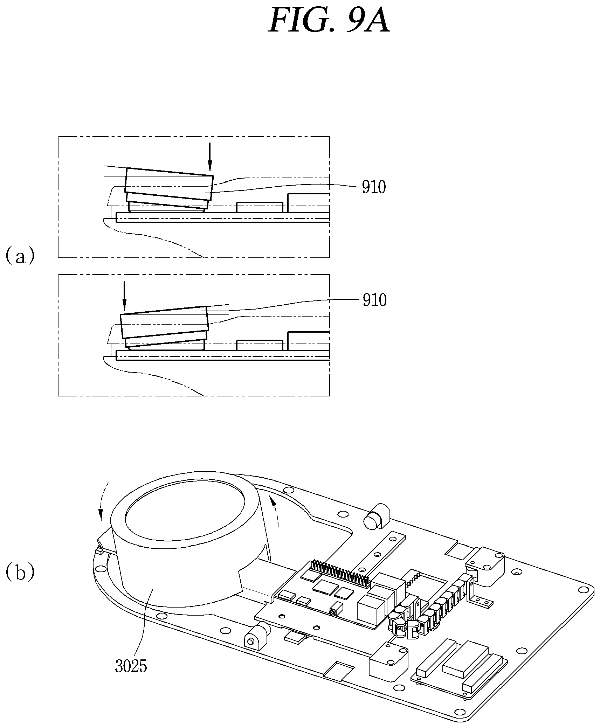

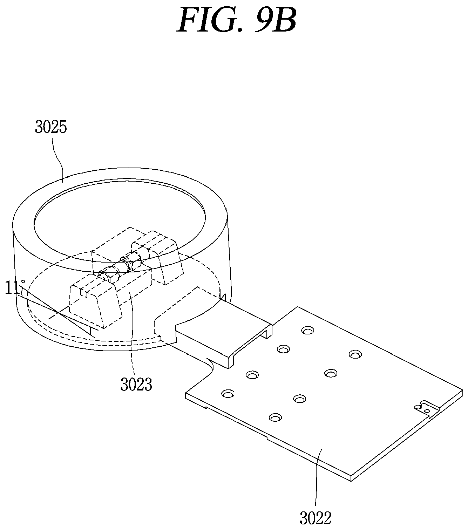

Subsequently, FIGS. 9A and 9B show a structure and detailed configuration of a second direction manipulation module for tilting the manipulation unit 910 of the console 900 up and down.

Referring to FIG. 9A, the second direction manipulation module included in the manipulation unit 910 includes a fourth fixed frame 3022 and a fourth movable frame 3025 connected to one side of the fourth fixed frame 3022 in order to generate a signal corresponding to the aforementioned first direction. In this case, the fourth fixed frame 3022 is made of metal, and the cover of the fourth movable frame 3025 can be formed of a material such as plastic or rubber.

The fourth fixed frame 3022 and the fourth movable frame 3025 can constitute part or all of the aforementioned third movable frame 3020.

The fourth fixed frame 3022 is connected to below one side of the fourth movable frame 3025 to support the fourth movable frame 3025. The fourth fixed frame 3022 elastically supports the fourth movable frame 3025 so as to allow the fourth movable frame 3025 to return to its original position after being tilted by an external force. To this end, the fourth fixed frame 3022 is configured such that the first connection module coupled to the fourth movable frame 3025 and the second connection module coupled to the third fixed frame 3010 form a 'T' shape as shown in FIG. 9B. The second connection module can be a substrate including a plurality of holes. Additionally, the second connection module can be located between the first connection modules, which can be a thick bar-shaped frame formed to secure the second connection module vertically like a clamp.

A tilting hinge 3023 arranged inside the fourth movable frame 3025 can be configured to be tiltable based on an external force applied to the fourth movable frame 3025. Specifically, the fourth movable frame 3025 can be tilted in an up-down direction (vertical direction) by an external force applied to the tilting hinge 3023 formed inside the fourth movable frame 3025. For example, the fourth movable frame 3025 is tilted vertically within a range of 11 to 15 degrees and then restored through the tilting hinge 3023 thereinside based on a direction and magnitude of an external force applied to the fourth movable frame 3025.

In an embodiment, the control part 850 of the vehicle display device 800 controls the second movable frame 2020 of the second drive module 830b to move in a second direction along the guide part 2115 of the second fixed frame 2010 based on a second signal generated according to a tilting of the fourth movable frame 3025.

Referring to FIGS. 9A and 9B, for example, when the fourth movable frame 3020 is tilted downward with respect to the frame of the console 900 based on an external force applied to the fourth movable frame 3025, a third signal is generated while the tilting hinge 3023 thereinside is tilted in a matching direction. The control part 850 generates and transmits a second drive signal that moves the second drive module 830b according to the generated third signal, and accordingly, controls the second movable frame 2020 to move along the guide part 2115 of the second fixed frame 2010 so as to allow the display part 820 to move in a direction that is exposed out of the internal space to the outside through the slot 801 of the frame 802.

Additionally, for example, when the fourth movable frame 3020 is tilted upward with respect to the frame of the console 900 based on an external force applied to the fourth movable frame 3025 (upper drawing in (a) of FIG. 9A), a fourth signal is generated while the tilting hinge 3023 thereinside is tilted in a matching direction. The control part 850 generates and transmits a second drive signal that moves the second drive module 830b according to the generated fourth signal, and accordingly, controls the second movable frame 2020 to move along the guide part 2115 of the second fixed frame 2010 so as to allow the display part 820 to move in a direction that is inserted from the outside into the internal space of the frame 802 through the slot 801 of the frame 802.

As described above, the vehicle display device 800 according to an embodiment of the present disclosure can communicate with to console 900 to intuitively move the vehicle display device 800 according to a movement/tilting of the manipulation unit 910 of the console 900.

Meanwhile, the vehicle display device 800 according to the present disclosure can detect, when the display part 820 moves in a first direction and/or moves in a second direction, a relative position according to the movement.

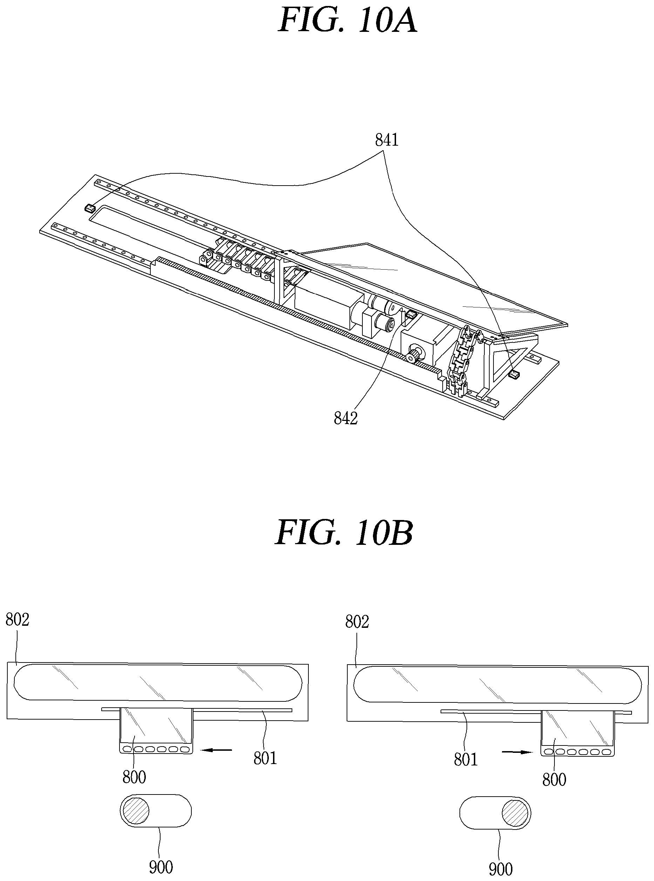

FIGS. 10A and 10B show an exemplary structure for detecting a relative position of the display part 820 when the vehicle display device 800 moves in a first direction according to the operation of the first drive module 830a.

In an embodiment, the vehicle display device 800 can further include a first sensor 841, 842 that detects a position of the first movable frame 1020 with respect to the first fixed frame 1010 of the first drive module 830a.

The first sensor 841, 842 includes a first position sensing sensor 841 arranged on the first fixed frame 1010 and a second position sensing sensor 842 arranged on the first movable frame 1020. For example, as shown in FIG. 10A, the first position sensing sensors 841 can be arranged at both ends of the first fixed frame 1010, respectively, and the second position sensing sensor 842 can be arranged at the center of a rear surface of the first movable frame 1020. In this case, each separation distance of the first position detection sensor 841 corresponds to a distance of movement by which the display part 820 can move in a horizontal direction (transverse direction).

The control part 850 of the vehicle display device 800 can determine a relative position of the first movable frame 1020 based on a sensing value of the first sensor 841, 842.

Specifically, when the display part 820 moves in a first direction, the relative position of the moving display part 820 can be detected based on whether the second position detection sensor 842 arranged on the first movable frame 1020 is closer to the left or the right of the first position detection sensors 841 arranged at both ends of the first fixed frame 1010, and based on a separation distance from that position detection sensor.

In an embodiment, the control part 850 of the vehicle display device 800 controls a screen of the display part 820 based on the relative position of the determined first movable frame 1020.

Specifically, when the relative position of the first movable frame 1020 determined based on the sensing value of the first sensor 841, 842 is close to or moving toward the driver's seat (or center) of the vehicle 100, a screen related to driving can be controlled to be displayed on the display part 820. On the other hand, when the relative position of the first movable frame 1020 determined based on the sensing value of the first sensor 841, 842 is close to or moving toward the passenger seat of the vehicle 100, a screen (e.g., infotainment menu screen) for an occupant in the passenger seat can be controlled to be displayed on the display part 820.

Referring to FIG. 10B, for example, when the vehicle display device 800 moves horizontally from the right to the left along the slot 801 formed in the frame 802 as the console 900 is manipulated to the left, such a change in position can be detected through the first sensor 841, 842 so as to allow the screen displayed on the display part 820 (and/or the second display part 825) to be displayed as a screen related to driving. Additionally, for example, when the vehicle display device 800 moves horizontally from the left to the right along the slot 801 formed in the frame 802 as the console 900 is manipulated to the right, and such a change in position can be detected through the first sensor 841, 842 so as to allow a screen displayed on the display part 820 (and/or the second display part 825) to be displayed as the screen for an occupant in the passenger seat.

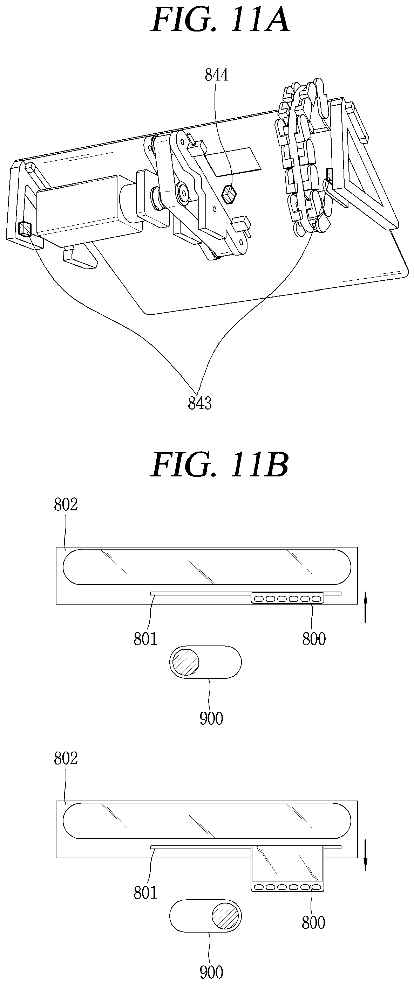

Subsequently, FIGS. 11A and 11B are drawings for explaining a structure in which a vehicle display device according to an embodiment of the present disclosure detects a position when moving in a second direction according to an operation of a second drive module.

In an embodiment, the vehicle display device 800 can further include a second sensor 843, 844 that detects a position of the second movable frame 2020 with respect to the second fixed frame 2010 of the second drive module 830b.

The second sensor 843, 844 includes a third position sensing sensor 843 arranged on the second fixed frame 2010 and a fourth position sensing sensor 844 arranged on the second movable frame 2020. For example, as shown in FIG. 11A, the third position sensing sensors 843 can be arranged at one sides of both fixed frames of the second fixed frame 2010, respectively, and the fourth position sensing sensor 844 can be arranged at the center of a rear surface of the second movable frame 2020. The fourth position detection sensor 844 detects a change in position due to a +/- vertical movement of the second movable frame 2020 based on the third position detection sensor 843.

The control part 850 of the vehicle display device 800 determines a relative position of the second movable frame 2020 based on a sensing value of the second sensor 843, 844.

Specifically, when the display part 820 moves in a second direction, a current position of the display part 820 can be detected based on a vertical separation distance of how much the fourth position detection sensor 844 arranged on the second movable frame 2020 has moved up or down in a vertical direction (y-axis) compared to the third position detection sensor 843 arranged horizontally side by side on one sides of both fixed frames of the second fixed frame 2010, respectively.

In an embodiment, the control part 850 of the vehicle display device 800 controls a screen of the display part 820 based on the relative position of the determined second movable frame 2020.

Specifically, when the relative position of the second movable frame 2020 determined based on the sensing value of the second sensor 843, 844 moves in a - y-axis direction that is slid out through the slot 801 of the frame 802 of the vehicle 100, the display part 820 can be activated to display, for example, a screen related to driving. On the other hand, when the relative position of the second movable frame 2020 determined based on the sensing value of the second sensor 843, 844 moves in a + y-axis direction that is slid into the internal space of the frame 802 through the slot 801 of the frame 802 of the vehicle 100, the display part 820 can be controlled to be inactivated.

Referring to FIG. 11B, for example, when the manipulation unit of the console 900 is manipulated to the left while being tilted upward (or manipulated in an order opposite thereto), prior to (or simultaneously/subsequent to) moving the vehicle display device 800 horizontally from the right to the left along the slot 801 formed in the frame 802, the display part can be slid into the internal space of the frame 802, and such a change in position can be detected through the second sensor 843, 844 so as to control a screen displayed on the display part 820 to be deactivated. Additionally, for example, as the manipulation unit of the console 900 is manipulated to the right while being tilted downward (or manipulated in an order opposite thereto), prior to (or simultaneously/subsequent to) moving the vehicle display device 800 horizontally from the left to the right along the slot 801 formed in the frame 802, the display part can be slid out of the internal space of the frame 802 through the slot 801, and such a change in position can be detected through the second sensor 843, 844 so as to allow the display part 820 to be activated to display a screen for an occupant in the passenger seat.

As described above, according to a vehicle display device in accordance with an embodiment of the present disclosure and an operating method thereof, a plurality of drive units can be implemented to operate in different directions, thereby allowing a display mounted on the drive units so as to be controlled to move in different directions. In addition, a motor and a connection element can be provided to provide a driving force for each of a plurality of drive units so as to adjust the driving force of the motor, thereby controlling a distance and/or speed of movement of the display to change. Additionally, the display can be moved intuitively according to various user manipulations on the console for controlling a movement of the display. Furthermore, through sensors provided in a plurality of drive units, respectively, the display can detect a change in position and perform screen control accordingly.

The foregoing present disclosure can be implemented as codes readable by a computer on a medium written by the program. The computer-readable media includes any type of recording apparatus in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage apparatus and the like, and also include an apparatus implemented in the form of a carrier wave (e.g., transmission over the Internet). In addition, the computer can also include a controller/processor of the vehicle display device 800. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A display device comprising:
a display part arranged in a housing having a slot and coupled to a plurality of drive units operating in different directions so as to be movable in different directions; and
a control part that controls an operation of each of the display part and the plurality of drive units,
wherein the plurality of drive units comprise:
a first drive unit operating to move the display part in a first direction, and
a second drive unit operating to move the display part in a second direction different from the first direction such that the display part is slid into or slid out the slot therethrough so as to increase or decrease its exposed area,
wherein the first drive unit comprises a first fixed frame and a first movable frame arranged on a rear surface of the display part, and the first movable frame is arranged to move in the first direction along a guide part of the first fixed frame,
wherein the second drive unit is arranged in the first movable frame to comprise a second fixed frame and a second movable frame, and the second movable frame is arranged to move in the second direction along a guide part of the second fixed frame, and
wherein the display part is arranged on a front surface of the first and second movable frames, and controlled to move along a direction of movement of each movable frame.

2. The display device of claim 1, wherein the first drive unit comprises a first cableveyor that moves in the first direction in conjunction with the first movable frame,
wherein the second drive unit comprises a second cableveyor that moves in the second direction in conjunction with the second movable frame, and
wherein each cableveyor comprises a plurality of unit chains connected to be mutually rotatable.

3. The display device of claim 1, wherein the first drive unit further comprises a first drive motor arranged on a rear surface of the first movable frame, and
wherein the first drive motor applies a driving force to a rack and pinion gear module in conjunction therewith so as to operate the first movable frame to move in the first direction along the guide part of the first fixed frame.

4. The display device of claim 3, wherein the control part controls electrical power applied to the first drive motor to control at least one of a distance and speed of movement of the first movable frame.

5. The display device of claim 1, wherein the second drive unit further comprises a second drive motor arranged on a rear surface of the second movable frame, and
wherein the second drive motor applies a driving force to a timing pulley and belt gear module in conjunction therewith so as to operate the second movable frame to move in the second direction along the guide part of the second fixed frame.

6. The display device of claim 5, wherein the control part controls electrical power applied to the second drive motor to control at least one of a distance and speed of movement of the second movable frame.

7. The display device of claim 1, further comprising:
a manipulation unit spaced apart from the display part to generate a signal matching the operation of the plurality of drive units according to a manipulation applied thereto,
wherein the manipulation unit comprises:
a first direction manipulation module that generates a signal matching the operation of the first drive unit, and a second direction manipulation module that generates a signal matching the operation of the second drive unit, and
wherein the control part transmits a signal generated by the manipulation unit to each drive unit so as to control the drive unit corresponding thereto to operate.

8. The display device of claim 7, wherein the first direction manipulation module comprises:
a third fixed frame and a third movable frame located above the third fixed frame, and
wherein the third movable frame is arranged to move horizontally along a guide part of the third fixed frame.

9. The display device of claim 8, wherein the first direction manipulation module further comprises:
a third cableveyor that moves horizontally in conjunction with the third movable frame, and a rack and pinion gear engaging with each other based on an external force applied thereto and operating to allow the third movable frame to move horizontally along the guide part of the third fixed frame.

10. The display device of claim 9, wherein the control part controls a first movable frame of the first drive unit to move in the first direction along the guide part of the first fixed frame based on a first signal generated according to a horizontal movement of the third movable frame.

11. The display device of claim 7, wherein the second direction manipulation module comprises:
a fourth fixed frame and a fourth movable frame connected to one side of the third fixed frame, and
wherein the fourth movable frame is configured to be tiltable in response to the driving of a tilting hinge arranged thereinside.

12. The display device of claim 11, wherein the control part controls the second movable frame of the second drive unit to move in the second direction along the guide part of the second fixed frame based on a second signal generated according to a tilting of the fourth movable frame.

13. The display device of claim 1, further comprising:
a first sensor that detects a position of the first movable frame based on the first fixed frame,
wherein the control part determines a relative position of the first movable frame based on a sensing value of the first sensor.

14. The display device of claim 13, wherein the control part controls a screen of the display part based on the determined relative position of the first movable frame.

15. The display device of claim 1, further comprising:
a second sensor that detects a position of the second movable frame based on the second fixed frame,
wherein the control part determines a relative position of the second movable frame based on a sensing value of the second sensor.

16. The display device of claim 15, wherein the control part controls a screen of the display part based on the determined relative position of the second movable frame.
